# EUROPEAN PATENT SPECIFICATION

(11) **EP 4 521 191 B1**
(45) Date of publication and mention of the grant of the patent: **29.04.2026**
(21) Application number: 24735459.0
(22) Date of filing: 20.06.2024
(51) Int. Cl.: G06F 1/16, H04M 1/02

(54) **HINGE STRUCTURE AND FOLDABLE ELECTRONIC DEVICE COMPRISING SAME**
SCHARNIERSTRUKTUR UND KLAPPBARE ELEKTRONISCHE VORRICHTUNG DAMIT
STRUCTURE DE CHARNIÈRE ET DISPOSITIF ÉLECTRONIQUE PLIABLE LA COMPRENANT

(30) Priority: 20.07.2023 KR 20230094861; 18.08.2023 KR 20230108235
(43) Date of publication of application: 12.03.2025
(73) Proprietor: Samsung Electronics Co., Ltd, Suwon-si, Gyeonggi-do 16677 (KR)
(72) Inventor: CHO, Sunggun, Suwon-si, Gyeonggi-do 16677 (KR); KIM, Jongkeun, Suwon-si, Gyeonggi-do 16677 (KR); PARK, Heejun, Suwon-si, Gyeonggi-do 16677 (KR); LEE, Giyun, Suwon-si, Gyeonggi-do 16677 (KR); CHO, Chongkun, Suwon-si, Gyeonggi-do 16677 (KR)
(74) Representative: HGF
(86) International application number: PCT/KR2024/008549
(87) International publication number: WO 2025/018613

(56) References cited:
- JP-A- 2022 531 211
- KR-A- 20210 101 717
- KR-A- 20220 050 462
- KR-A- 20220 067 946
- US-A1- 2023 027 462

## Description

### [Technical Field]

Various embodiments of the disclosure relate to a hinge structure and a foldable electronic device including the same.

### [Background Art]

Portable electronic devices, such as smartphones, may provide various functions as well as call functions based on various types of applications. In a process of providing various functions, portable electronic devices may output screens corresponding to the function. When using the various functions described above, the user may wish to use a wider screen for better visibility of the output screens. However, when the display device becomes larger to display the screen in a typical portable electronic device, an overall size thereof increases, and thus, may deteriorate portability. That is, as the display device becomes larger, a size of the portable electronic device also increases. Having a larger portable device reduces the portability of the electronic device, which may inconvenience a user. Accordingly, foldable portable electronic devices are being developed so that a screen size may be increased while maintaining portability.
JP2022531211 A discloses, according to its abstract, the task of providing hinge structures and portable communication devices including them. The solution given is that the hinge structure comprises a first rotating bracket rotating with respect to the first virtual axis, a second rotating bracket rotating with respect to the second virtual axis, a fixing bracket in which the first rotating bracket and the second rotating bracket are fixed, a first rotating member and a second rotating member, a first arm portion, a second arm portion, and a cam portion including an uneven structure, and the first elastic body mounted on the first rotating member and the second elastic body mounted on the second rotating member supporting at least the other side of the cam part and the support bracket supporting the first elastic body and the second elastic body are provided.

### [Disclosure]

### [Technical Problem]

### [Technical Solution]

The scope of the present invention is determined according to the independent claim. Various embodiments of the present invention are outlined in the dependent claims.Also disclosed herein is that a foldable electronic device (or a portable electronic device, a portable communication device, a foldable electronic device having a communication function) may include a display, a first housing and a second housing in which at least a portion of the display is accommodated, a hinge structure connected with the first housing and the second housing, and a hinge housing on which the hinge structure is seated. The hinge structure may include a fixing bracket including a first rail and a second rail, wherein at least a portion of the first rail and the second rail is seated on the hinge housing, a first rotating member including a first rail structure fastened to the first rail to rotate and a second rail structure extending from the first rail structure, a second rotating member including a third rail structure fastened to the second rail to rotate and a fourth rail structure extending from the third rail structure, a first arm member rotating in response to rotation of the first rotating member and including a fifth rail structure, a second arm member rotating in response to rotation of the second rotating member and including a sixth rail structure, a first support member disposed between one surface of the first housing and the other surface of the fifth rail structure to contact the other surface of the fifth rail structure, a second support member disposed between one surface of the first housing and the other surface of the second rail structure to contact the other surface of the second rail structure, a third support member disposed between one surface of the second housing and the other surface of the sixth rail structure to contact the other surface of the sixth rail structure, and a fourth support member disposed between one surface of the second housing and the other surface of the fourth rail structure to contact the other surface of the fourth rail structure. The first support member may apply a force in a first direction on an opposite surface of the fifth rail structure, the second support member may apply a force in a second direction on an opposite surface of the second rail structure, the third support member may apply a force in a third direction on an opposite surface of the sixth rail structure, and the fourth support member may apply a force in a fourth direction on an opposite surface of the fourth rail structure.

Also disclosed herein is that a foldable electronic device (or a portable electronic device, a portable communication device, a foldable electronic device having a communication function) may include a display, a first housing and a second housing in which at least a portion of the display is accommodated, a hinge structure connected with the first housing and the second housing, and a hinge housing on which the hinge structure is seated. The hinge structure may include a fixing bracket including a first rail and a second rail, wherein at least a portion of the first rail and the second rail is seated on the hinge housing, a first rotating member including a first rail structure fastened to the first rail to rotate and a second rail structure extending from the first rail structure, a second rotating member including a third rail structure fastened to the second rail to rotate and a fourth rail structure extending from the third rail structure, a first arm member rotating in response to rotation of the first rotating member and including a fifth rail structure, a second arm member rotating in response to rotation of the second rotating member and including a sixth rail structure, a first support member disposed between one surface of the first housing and the other surface of the fifth rail structure to contact the other surface of the fifth rail structure, and applying force in a first direction that is an axial direction of the fifth rail structure on the other surface of the fifth rail structure, and a second support member disposed between one surface of the first housing and the other surface of the second rail structure to contact the other surface of the second rail structure and applying force in a second direction that is different from an axial direction of the rail structure on the other surface of the second rail structure.

Also disclosed herein is that the hinge structure employed in a portable communication device may include a fixing bracket including a first rail and a second rail, a first rotating member including a first rail structure fastened to the first rail to rotate and a second rail structure extending from the first rail structure, a second rotating member including a third rail structure fastened to the second rail to rotate and a fourth rail structure extending from the third rail structure, a first arm member rotating in response to rotation of the first rotating member and including a fifth rail structure, a second arm member rotating in response to rotation of the second rotating member and including a sixth rail structure, a first support member disposed to contact the other surface of the fifth rail structure, and applying force in a first direction from the other surface of the fifth rail structure, a second support member disposed to contact the other surface of the second rail structure and applying force in a second direction that is skewed with the first direction on one surface of the second rail structure, a third support member disposed to contact the other surface of the sixth rail structure, and applying force in a third direction from the other surface of the sixth rail structure, and a fourth support member disposed to contact the other surface of the fourth rail structure and applying force in a fourth direction that is skewed with the third direction on one surface of the fourth rail structure.

### [Advantageous Effects]

Advantageously, a hinge structure as described has improved stability. The support structures prevent or reduce a wobble occurring when the hinge structure is folded.

### [Description of Drawings]

FIG. 1 is an exploded perspective view of an electronic device according to an embodiment.
FIGS. 2A and 2B are views illustrating an example of a display structure of an electronic device according to an embodiment.
FIG. 3 is a view illustrating an example of a hinge structure according to an embodiment.
FIG. 4A is a front view of an exploded perspective view of a hinge structure according to an embodiment.
FIG. 4B is a rear view of an exploded perspective view of a hinge structure according to an embodiment.
FIG. 5A is a front view of an exploded perspective view of a hinge module according to an embodiment.
FIG. 5B is a rear view of an exploded perspective view of a hinge module according to an embodiment.
FIG. 6 is a view illustrating an open state and a closed state of a hinge structure included in an electronic device according to an embodiment.
FIG. 7 is a view illustrating an example of formation of an axis of a hinge structure in an open state included in an electronic device according to an embodiment.
FIG. 8 is a view illustrating an example of a state of a hinge structure and states of support members that support an arm member and a rotating member in an open state of an electronic device according to an embodiment.
FIG. 9 is a view illustrating an example of a state of the hinge structure and states of support members that support an arm member and a rotating member in an intermediate state of an electronic device according to an embodiment.
FIG. 10 is a view illustrating an example of a state of a hinge structure and states of support members that support an arm member and a rotating member in a closed state of the electronic device according to an embodiment.
FIG. 11 is a view illustrating an example of a state of a hinge structure and states of support members that support an arm member and a rotating member in an open state of an electronic device according to an embodiment.
FIG. 12 is a view illustrating an example of a state of a hinge structure and states of support members that support an arm member and a rotating member in an open state of an electronic device according to an embodiment.
FIG. 13 is a view illustrating an example of a state of a hinge structure and states of support members that support an arm member and a rotating member in an open state of an electronic device according to an embodiment.
FIG. 14 is a view illustrating an example of a state of a hinge structure and states of support members that support an arm member and a rotating member in an open state of an electronic device according to an embodiment.
FIG. 15 is a view illustrating an example of a process of assembling a hinge structure according to an embodiment.
FIG. 16 is a view illustrating a portion of a hinge structure assembled through an assembly process of FIG. 15.
FIG. 17 is a view illustrating an example of an assembly process of a hinge structure according to an embodiment.
FIG. 18 is a view illustrating a portion of a hinge structure assembled through an assembly process of FIG. 17.
FIG. 19 is a view illustrating an example of a portion of a housing of an electronic device according to an embodiment.

### [Mode for Invention]

Hereinafter, various embodiments of the disclosure will be described with reference to the accompanying drawings.

There is provided a hinge structure that may improve a rail gap between a rail and a rail structure, a deviation of assembly between the rail and the rail structure, and/or a deviation of driving between the rail and the rail structure. This is achieved by attaching the rail and the rail structure that are assembled with respect to an axis that involves in rotation of at least any one of an arm member and a rotating member, through a support member, and a foldable electronic device.

Furthermore, the disclosure provides a hinge structure that may offset a deviation of a rail and a rail structure related to rotation of an arm member and a deviation of a rail and a rail structure related rotation of a rotating member by making a direction of a force applied to the rail and the rail structure assembled with respect to an axis that involves in rotation of the arm member through a support member and a direction of a force applied to the rail and the rail structure assembled with respect to an axis that involves rotation of the rotating member through a support member skewed with each other.

Furthermore, the disclosure provides a hinge structure that may stably widely support an arm member and a rotating member while reducing friction with the arm member and the rotating member by grooving rear surfaces of the arm member and the rotating member, and a foldable electronic device including the same.

Other intended purposes according to various embodiments of the disclosure will be mentioned as necessary when describing the embodiments.

The hinge structure of the present invention, and a foldable electronic device including the same, support the folding of a foldable electronic device into a parallel gap.

Furthermore, the hinge structure, and foldable device including the same, may remove (or reduce) a folding movement by maintaining a gap between a rail and a rail structure constant.

In addition, various purposes and effects provided by a hinge structure and an electronic device including the same according to various embodiments may be mentioned during the detailed description of the embodiments.

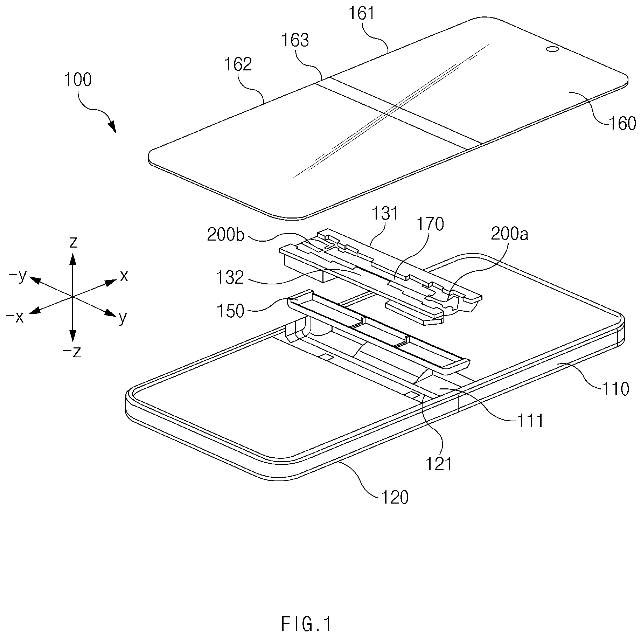

FIG. 1 is an exploded perspective view of an electronic device according to an embodiment.

Referring to FIG. 1, an electronic device 100 (or a foldable electronic device, a portable electronic device, a portable communication device, or a portable device) according to an embodiment may include a first housing 110, a second housing 120, a hinge housing 150, a center bar 170 (or a bar plate), wing plates 131 and 132 (or plates), a display 160, and at least one hinge structure 200a and 200b. When this electronic device 100 is in a closed state, a closed region (or a folding region) of the display 160 is formed into a water drop shape (or a dumbbell shape). Gravity acting on the closed region of the display helps secure a folding curvature (R) that prevents cracks or buckling folding in the closed region of the display 160. Furthermore, the dumbbell-shaped closed region of the display may be disposed in a specific space of the housings 110 and 120 whereby a gap between the housings 110 and 120 that are disposed to face each other and have an 11-shaped disposition state may be reduced. Through this, the electronic device 100 may reduce an overall size of the electronic device 100 by reducing an aperture between the housings 110 and 120 in the closed state, and may prevent or restrain foreign substances from being introduced between the housings 110 and 120.

The first housing 110 may be connected to the second housing 120 using at least one hinge structure 200a and 200b. The first housing 110 may include a bottom region, on which the display 160 is seated, and a side wall or a separately provided frame that surrounds an edge of the display 160 or a periphery of a region, in which the display 160 is mounted. Furthermore, a rear cover may be disposed on a rear surface of the first housing 110. Here, the rear cover may be omitted.

At least a portion of the first housing 110 may be adhered to at least a portion of a first region 161 of the display 160. Alternatively, at least a portion of a periphery of a front surface (a surface that faces the z-axis direction) of the first housing 110 may be adhered to at least a portion of a periphery of the first region 161 of the display 160. In this regard, an adhesive layer may be disposed between the front surface of the first housing 110 and the first region 161 of the display 160.

At least a portion of an inside of the first housing 110 may have a hollow shape. At least one of at least one circuit board, at least one battery, and at least one camera module may be disposed in an interior of the first housing 110. The circuit board and the battery disposed in the first housing 110 may be electrically connected to electronic elements (e.g., at least one circuit board and at least one battery) that are disposed in an interior of the second housing 120 through a flexible board (not illustrated). For example, a flexible board (not illustrated) may extend from a partial region of the first housing 110 across the hinge housing 150 to a partial region of the second housing 120. A partial region of the flexible board (not illustrated) may be located in an interior of the hinge housing 150. For example, a processor and a memory may be disposed on the circuit board disposed in the first housing 110.

At least a portion of the first housing 110 may be formed of a metal material, or at least a portion thereof may be formed of a non-metal material. The first housing 110 may be formed of a material with a certain level of strength to support at least a portion of the display 160. In an embodiment, when the electronic device 100 is in an open state, at least a portion of a portion (or a portion that is adjacent to the second housing 120) of the first housing 110, which faces the second housing 120, may include a recessed portion such that the hinge housing 150 is disposed thereon.

The first housing 110 may be connected to at least one hinge structure 200a and 200b, and by an external pressure (e.g., a force applied by the user who grips the first housing 110) that is applied from an outside, may be rotated counterclockwise (e.g., a direction when the electronic device 100 is folded), in which it is moved from an arbitrary point other than 0 between the -x axis and the x axis to an arbitrary point between the z axis and the -z axis, or may be rotated clockwise (e.g., a direction when the electronic device 100 is unfolded). When the electronic device 100 is in the closed state, the first housing 110 may be disposed in parallel to the z axis or may be disposed in parallel to the second housing 120. While the first housing 110 is disposed in parallel to the second housing 120, at least some of three edges (or peripheries) of the first housing 110 (e.g., the remaining edges other than a periphery that is adjacent to the second housing 120 when the electronic device is in the open state) may be disposed to contact three edges of the second housing 120 (e.g., the remaining edges other than a periphery that is adjacent to the first housing 110 when the electronic device 100 is in the open state).

The second housing 120 may be connected to the first housing 110 through at least one hinge structure 200a and 200b. The second housing 120 may include a front surface (or a bottom surface), on which at least a portion (e.g., at least a portion of a second region 162) of the display 160, a side wall that surrounds the front surface or an edge of at least a portion of the second region 162 of the display 160, or a separately provided frame. At least a portion of the second housing 120 may be adhered to at least a portion of the second region 162 of the display 160. Alternatively, at least a portion of a periphery of a front surface of the second housing 120 may be adhered to the periphery of the second region 162 of the display 160. In this regard, an adhesive layer may be disposed between the front surface of the second housing 120 and the second region 162 of the display 160.

Similar to the first housing 110, the second housing 120 may have a hollow in at least a portion of an inside thereof. At least one of at least one circuit board and at least one battery may be disposed in an interior of the second housing 120. Alternatively, at least one battery may be disposed in any one of the first housing 110 and the second housing 120, or in both of them. At least one of the printed circuit board or the battery disposed in the second housing 120 may be electrically connected to a component (e.g., at least one of the printed circuit board or the battery) disposed in the first housing 110 through a flexible board.

Similar to the first housing 110, the second housing 120 may have at least a portion formed of a metal material, or at least a portion formed of a non-metal material. The second housing 120 may be formed of a material with a specific level of strength to support at least a portion of the display 160. In an embodiment, when the electronic device 100 is in the open state, a portion (or a portion that is adjacent to the first housing 110) of the second housing 120, which faces the first housing 110, may include a recessed portion, in which at least a portion thereof is recessed such that the hinge housing 150 is disposed thereon. The recessed portion of the second housing 120 may be disposed adjacent to the recessed portion of the first housing 110. A rear cover may be disposed on a rear surface of the second housing 120. Here, the rear cover may be omitted.

At least a portion of the hinge housing 150 may be disposed at a recessed portion, at which the first housing 110 and the second housing 120 face each other, or a portion, at which they are adjacent to each other when the electronic device 100 is in the open state. The hinge housing 150 may be provided in a shape that extends longer in the y-axis direction than in the x-axis direction. However, the disclosure is not limited thereto, and depending on the type of electronic device 100, the x-axis direction may be longer than the y-axis direction. A structure (e.g., a boss or a hook) for fixing at least one hinge structure 200a and 200b may be disposed in a partial region of an inner surface of the hinge housing 150.

At least a portion of the display 160 may have flexibility. For example, the display 160 includes a first region 161, at least a portion of which is disposed on the first housing 110, and a second region 162, at least a portion of which is disposed on the second housing 120, and a third region 163 (or a closed region, or a folding region) that is located between the first region 161 and the second region 162.

When the electronic device 100 is in a folded or open state, at least a portion of the first region 161 and the second region 162 may be disposed in a flat state, and at least a portion of the third region 163 of the electronic device 100 may have a curved state when it is in the closed state. For example, the first region 161 and the second region 162 may maintain a flat state regardless of the state of the electronic device 100 (a disposition position of a plane is changed), and the third region 163 may be transformed into a curved state or a flat state in correspondence to the state of the electronic device 100. For example, when the electronic device 100 is in the open state, the third region 163 has a flat state, and when the electronic device 100 is in the closed state, at least a portion thereof may have a curved state.

The display 160 may include various layers. For example, the display 160 may include an external protective layer (or a glass layer, or a polymer layer) that has a specific amount of transparency and a specified size, and a display panel layer (or a panel layer, a panel, or a display panel) that is disposed under the external protective layer, and at least one first rear surface layer (or a rear panel or a rear part) that is disposed under the display panel layer. The first rear surface layer may include at least one of an impact absorbing layer (or an embossed layer) and a heat dissipating layer (or a metal sheet layer). Additionally or alternatively, the first rear surface layer may further include an electromagnetic induction panel (e.g., a digitizer). The display 160 may further include a second rear surface layer that is disposed under the first rear surface layer. The second rear surface layer (or a rear panel or a rear part) may include at least one metal layer (or a metal sheet), at least a portion of which is formed of a metal material. It may include a specified pattern (e.g., a lattice pattern or slit pattern) such that at least a portion of the second rear surface layer may be curved. Alternatively, at least a portion of the second rear surface layer may be formed of another bendable material (e.g., a polymer material, plastic, rubber, or a leather material). At least one of the first rear surface layer and the second rear surface layer may be omitted.

At least a portion of at least one hinge structure 200a and 200b may be disposed in the hinge housing 150, and at least a portion (e.g., 200a and 200b) of the plurality of hinge structures 200a and 200b may has similar structures and shapes. In FIG. 1, a structure, in which two hinge structures 200a and 200b of similar shapes are disposed in the hinge housing 150, has been described, but the disclosure is not limited thereto, and three or more hinge structures 200a and 200b having interlocking structure of similar shapes may be disposed, a hinge structure having a non-interlocking structure of a different shape may be omitted, or two or more hinge structures 200a and 200b having interlocking structure of different shape may be mounted on the hinge housing 150. Among the at least one hinge structure 200a and 200b, some hinge structures 200a and 200b may perform a hinge operation based on eight axes (or six imaginary axes and two actual axes) and four sliding structures (or link structures), and thus help the third region 163 of the display 160 have a dumbbell shape.

The center bar 170 may be disposed between the display 160 and the hinge structure 200a and 200b. The center bar 170 may be disposed to cover at least a portion of a central region of at least one of the first hinge structure 200a and the second hinge structure 200b. As an example, the center bar 170 may be disposed to cover at least a portion of the central region of each of the first hinge structure 200a and the second hinge structure 200b. The center bar 170 may be fastened and fixed to at least one of the hinge housing 150 and the hinge structures 200a and 200b.

The wing plates 131 and 132 are coupled to at least one hinge structure 200a and 200b, and are disposed to cover at least a portion of a surface of the at least one hinge structure 200a and 200b in the z-axis direction when the electronic device 100 is in the open state. The wing plates 131 and 132 are provided to be separated from the housings 110 and 120. Accordingly, a gap may be formed between the wing plates 131 and 132 and the housings 110 and 120. The wing plates 131 and 132 may be disposed on opposite sides with the center bar 170 being interposed therebetween. For example, a first wing plate 131 may be located in the x-axis direction with respect to the center bar 170, and a second wing plate 132 may be located in the -x-axis direction with respect to the center bar 170. When the wing plates 131 and 132 are coupled to the hinge structures 200a and 200b, they may be disposed at the same height or on the same by plane as that of the center bar 170 with respect to the z axis. The wing plates 131 and 132 may be rotated clockwise or counterclockwise according to a hinge operation of the at least one hinge structure 200a and 200b. For example, while the first wing plate 131 is rotated counterclockwise, the second wing plate 132 may be rotated clockwise, and while the first wing plate 131 is rotates clockwise, the second wing plate 132 may be rotated counterclockwise. The first wing plate 131 supports a flat first surface of the third region 163 of the display 160 that is folded into a dumbbell shape (or a water drop shape with the gravity applied), and the second wing plate 132 may support a flat second surface (a surface that is symmetrical to the first surface with respect to the z axis) of the third region 163 of the display 160 that is folded into the dumbbell shape.

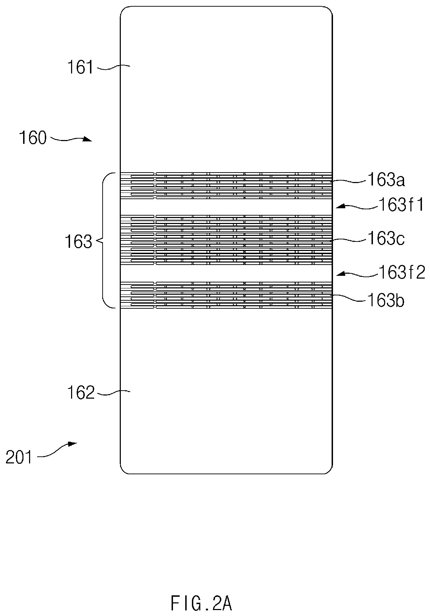

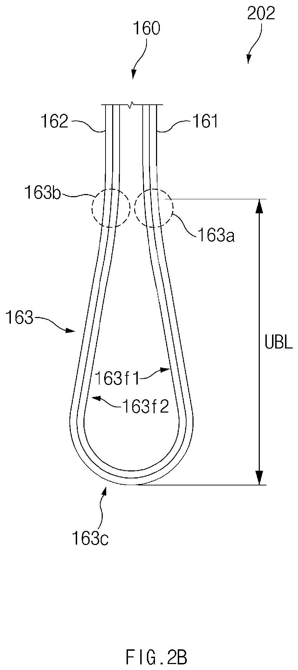

FIGS. 2A and 2B are views illustrating an example of the display structure of the electronic device according to an embodiment. FIG. 2A is a view illustrating a state, in which the display of the electronic device is unfolded, and FIG. 2B is a view illustrating a state, in which the display of the electronic device folded. The lattice regions 163a, 163b, and 163c illustrated in FIG. 2A are illustrated for convenience of description, and when the display is disposed on an upper side of the lattice regions 163a, 163b, and 163c, the corresponding lattice regions 163a, 163b, and 163c may not be observed on the front surface. Furthermore, in FIG. 2B, for convenience of description, the regions 161, 162, and 163 of the display 160 are indicated, and the structure represented as a multi-layer in FIG. 2B may mean a panel layer (e.g., a layer that is located on an inner side of FIG. 2B), and a support layer or a support substrate (e.g., a layer that is located on an outside of FIG. 2B), on which the lattice regions 163a, 163b, and 163c are formed while supporting the panel layer.

Referring to FIGS. 1 to 2B, the display 160 of the electronic device 100 may include a first region 161 (or a first part or a first position, or a first area or a first section), a second region 162 (or a second part or a second position or a section area or a second section), and a third region 163 (or a third part, a third position, a third section, a third area, or a folding region). The first to third regions 161, 162, and 163 may be connected to each other. The third region 163 is disposed between the first region 161 and the second region 162. Accordingly, one side (e.g., a left periphery in the illustrated drawing) of the third region 163 is connected to a lower periphery of the first region 161, and an opposite side (e.g., a right periphery in the illustrated drawing) of the third region 163 is connected to an upper periphery of the second area. With reference to a longitudinal direction of the drawing, the widths of the first region 161 and the second region 162 may be the same or similar. The third region 163 may have the same or similar width to that of the first region 161 or the second region 162, or may have a shorter width. With respect to a transverse direction of the drawing, the first region 161, the second region 162, and the third region 163 may have the same length.

The third region 163 may be a region that is folded, or in a folded position, when the electronic device 100 is in the closed state. All parts or a part of the panel protective layer disposed on a lower side of the third region 163 (or at least one rear surface layer disposed on a lower side of the panel protective layer) may include a lattice pattern. Referring to the illustrated drawing, the third region 163 may be formed in a water drop shape (or a dumbbell shape), in which water drops fall by the gravity from an upper side to a lower side with reference to the drawing. In this regard, the third region 163 may include a convex region 163c that is convex downward, flat regions 163f1 and 163f2 that extend from opposite sides of the convex region 163c to a boundary (or peripheries) of the first region 161 and the second region 162, and curved regions 163a and 163b (regions have a reverse curvature when viewed from a curvature direction of the convex region 163c) that are formed between the flat regions 163f1 and 163f2 and the first region 161 and the second region 162. The curved regions 163a and 163b may have a curvature in a direction different from a direction, in which the convex region 163c is convex. A length (UBL) of the folded part (or the third region 163 or the folding region) of the display 160 may range from the curved regions 163a and 163b to one point (a lowermost end point of the convex region 163c) of an end point of the convex region 163c, and the length (UBL) of this folded part may influence a position and a thickness of the center bar 170 described in FIG. 1, positions, widths, and thicknesses of the wing plates 131 and 132, and sizes of the recessed portions of the first housing 110 and the second housing 120.

A direction, in which the lattice pattern corresponding to the convex region 163c is curved, may be different from a direction, in which the lattice patterns corresponding to the curved regions 163a and 163b are curved. For example, the convex region 163c is convexly curved from a direction, in which a screen of the display 160 is displayed, toward a rear side, and the curved regions 163a and 163b are curved from the rear of the display 160 toward the direction in which the screen is displayed. It may be curved convexly. The lattice pattern may be omitted from a panel protective layer corresponding to the flat regions 163f1 and 163f2. The lattice patterns formed in the curved regions 163a and 163b and the lattice pattern formed in the convex region 163c may have the same or similar shapes. For example, the lattice patterns formed in the curved regions 163a and 163b may include at least one of a half-etching type (e.g., a type, in which grooves of a specific pattern are formed on a surface of a metal layer) or an etched hole type (e.g., a type, in which a plurality of holes that pass through front and rear surfaces of the metal layer or empty spaces are disposed in a specific pattern). Alternatively, some of the lattice patterns of the curved regions 163a and 163b may be formed as the half-etching type and the others may be formed as the etched hole type. According to an embodiment, the etched shape may be omitted. As the lattice pattern of the convex region 163c has a relatively higher curvature than those of the curved regions 163a and 163b, a lattice pattern that is different from those of the curved regions 163a and 163b may be formed to have a more flexible shape. For example, at least one of an etching size and an etching depth of the lattice pattern of the convex region 163c may be larger than those of the curved regions 163a and 163b, and a gap between the patterns (e.g., the grooves or the holes) is smaller than those of the curved regions 163a and 163b.

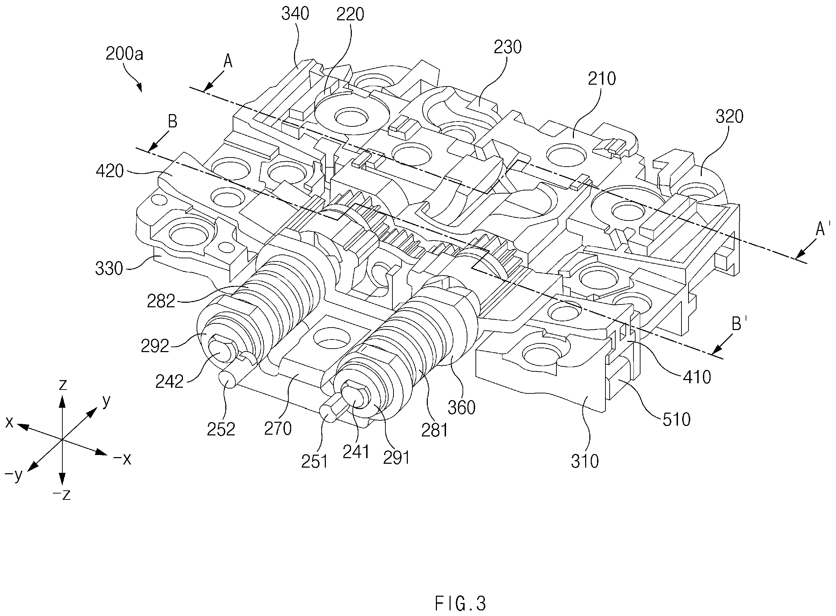

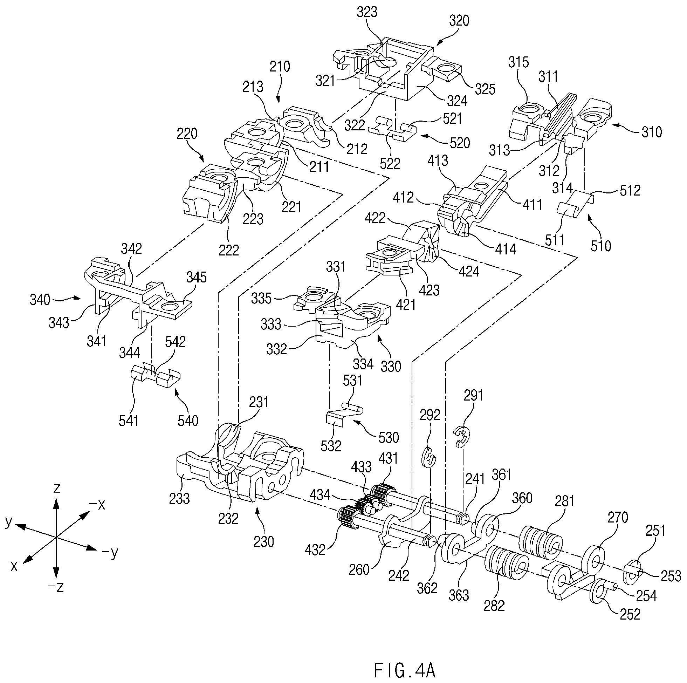

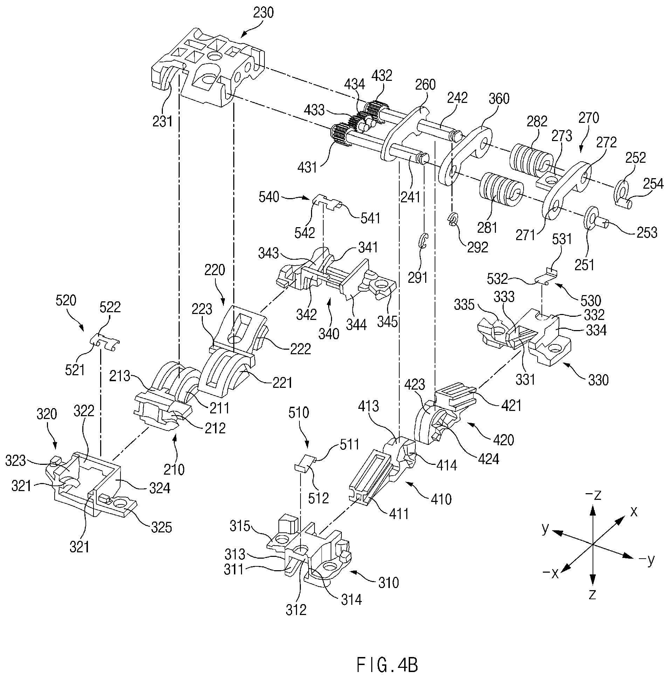

FIG. 3 is a view illustrating an example of the hinge structure according to an embodiment, FIG. 4A is a front view of an exploded perspective view of the hinge structure according to an embodiment, and FIG. 4B is a rear view of an exploded perspective view of the hinge structure according to an embodiment. In FIGS. 3 to 4B, among the hinge structures 200a and 200b previously described in FIG. 1, a first hinge structure 200a will be described as an example. The first hinge structure 200a may have the same structure and configuration as those of the second hinge structure 200b.

Referring to FIGS. 1 to 4B, the first hinge structure 200a may include a fixing bracket 230 (or a central bracket), a first rotating member 210 (or a first rotating structure or a first rotating body), a second rotating member 220 (or a second rotating structure or a second rotating body), a first link member 310 (or a first slide link, a first rotation support structure, or a first arm link member), a second link member 320 (or a second slide link, a second rotation support structure, or a first rotating link member), a third link member 330 (or a third slide link, a third rotation support structure, or a second arm link member), a fourth link member 340 (or a fourth slide link, a fourth rotation support structure, or a second rotating link member), a first arm member 410 (or a first arm structure or a first arm), a second arm member 420 (or a second arm structure or a second arm), a first support member 510 (or a first support body or first gap support structure), a second support member 520 (or, a second support body or a second gap support structure), a third support member 530 (or a third support body or a third gap support structure), and a fourth support member 540 (or a fourth support body or a fourth gap support structure.

At least one of the components included in the above-described first hinge structure 200a may be omitted. For example, the first rotating member 210 and the second rotating member 220 may be directly coupled to the housings 110 and 120, and the arm members 410 and 420 may be rotated in correspondence to rotation of the rotating members 210 and 220 while being coupled to the rotating members 210 and 220. That is, the rotation of the rotating members causes a corresponding rotation to the arm members.

The first hinge structure 200a may include a first shaft 241 and a second shaft 242, a cam member 360 (or a cam structure), a first main gear 431, a second main gear 432, at least one idle gear 433 and 434, a gear fixing portion 260 (or a gear bracket), a shaft fixing portion 270 (or a shaft bracket), a first elastic member 281, a second elastic member 282, a first coupling member 291, and a second coupling member 292. Gear structures (e.g., a first main gear 431, a second main gear 432, and at least one idle gear 433 and 434) that will be described below, and a gear bracket 260 may also be omitted in correspondence to removal of the interlocking function.

The fixing bracket 230 may include a bracket body 233, a first rail 231 (or a first fixing rail), and a second rail 232 (or a second fixing rail). On one side (e.g., a side wall that faces the -y-axis direction) of the bracket body 233, grooves, in which peripheries (e.g., a +y-axis periphery) of the first shaft 241 and the second shaft 242 may be held, may be formed. On one side (e.g., a side wall that faces the y-axis direction) of the bracket body 233, grooves, in which at least one idle gear 433 and 434 may be held, may be formed.

At least a portion of the fixing bracket 230 may be seated and fixed on one side of the hinge housing 150. For example, the fixing bracket 230 may be fixed to a -y-axis periphery or a y-axis periphery of the hinge housing 150. The fixing bracket 230 may include a structure (e.g., a first rail 231 and a second rail 232) that is configured such that a portion (e.g., the first rail structure 211) of the first rotating member 210 and a portion (e.g., the third rail structure 221) of the second rotating member 220 may be fastened to be rotatable. That is, a portion of the first rotating member and a portion of the second rotating member are rotatably fastened.

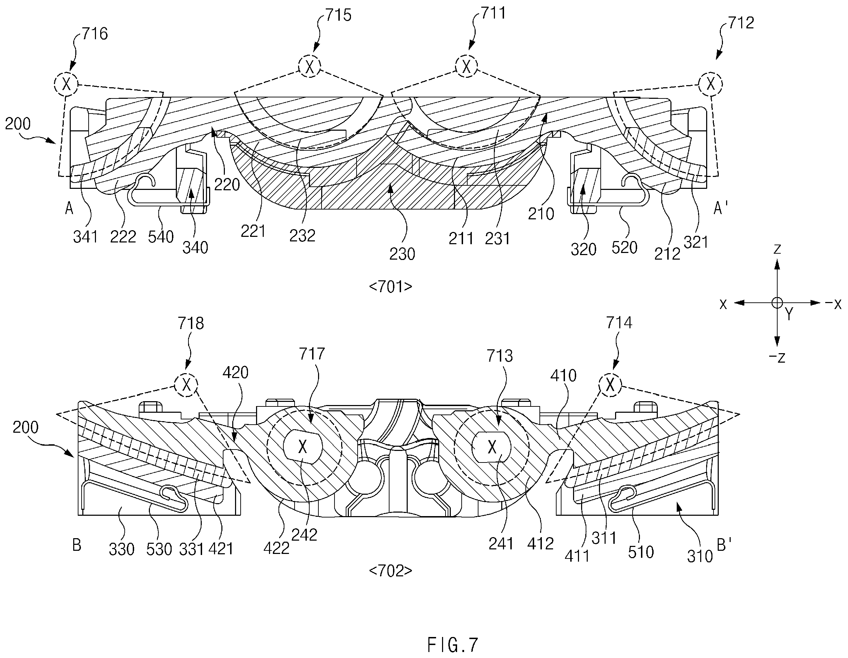

The first rail 231 of the fixing bracket 230 has an imaginary axis (e.g., a first axis (e.g., the first axis 711 of FIG. 7, the first imaginary axis, or the first fixing axis)), about which the first rail structure 211 of the first rotating member 210 may be rotated in its place (that is, about its axis). The first rail 231 may be formed in a structure corresponding to the first rail structure 211. For example, the first rail 231 may include two arc-shaped or half-moon shaped rails. A portion (e.g., the second rail structure 212) of an opposite side of the first rotating member 210 is rotated or slid in a curved path with respect to a second axis (e.g., the second axis 712 of FIG. 7, the second imaginary axis, or the first movement axis) that is different from the first axis. The second rail 232 defines an imaginary axis (e.g., the fifth axis 715 or third imaginary axis in FIG. 7, or the second fixed axis) that may be rotated in its place (that is, about its axis) while the third rail structure 221 of the second rotating member 220 is rotated. A portion (e.g., the fourth rotating rail structure 222) of an opposite side of the second rotating member 220 is rotated or slid in a curved path with respect to a sixth axis (e.g., the sixth axis 716 of FIG. 7, the fourth imaginary axis, or the second movement axis) that is different from the fifth axis.

The fixing bracket 230 may be formed of a material (e.g., a metal material or a reinforced plastic having a specific strength) having a specific strength to support movement of the first rotating member 210 and the second rotating member 220 in a hinge operation process (an operation of changing an angle between the first housing 110 and the second housing 120 from 0 degrees to 180 degrees or holding them at a specific angle between 0 degrees and 180 degrees). In the above description, it has been exemplified that the fixing bracket 230 is fixed to the hinge housing 150, but the hinge housing 150 may be provided in a shape of the fixing bracket 230.

The first rotating member 210 may include a first rotating body 213, a first rail structure 211 (or a first rotating rail structure) that is disposed in the x-axis direction of the first rotating body 213, a second rail structure 212 (or a second rotating rail structure) that is disposed in the -x-axis direction of the first rotating body 213. Alternatively, the first rotating member 210 may include one side (e.g., a part (e.g., the first rail structure 211) that is fastened to the first rail 231 and then is coupled such that a hinge movement thereof is allowed) of the fixing bracket 230, and one side (e.g., a part (e.g., the second rail structure 212) that is fastened to the fourth rail 321) of the second link member 320.

While the second link member 320 coupled to the first housing 110 performs a hinge operation (or is rotated counterclockwise or clockwise), the first rail structure 211 of the first rotating member 210 fastened to the fixing bracket 230 may be rotated in its place (e.g., rotated counterclockwise or clockwise). The second rail structure 212 coupled to the second link member 320 may be rotated (or slid) in the second link member 320 (e.g., the fourth rail 321) while being moved in one direction (e.g., counterclockwise while the electronic device 100 is folded from the open state or clockwise while the electronic device 100 is unfolded from the closed state).

The first rotating body 213 may include a structure (e.g., at least one hole that passes upward and downward) that may be coupled to the first wing plate 131. The first rotating member 210 may generate friction with the fixing bracket 230 and the second link member 320 while the hinge operation is repeated or performed, and may be formed of a material (e.g., a metal material) with a specific strength or higher that may withstand the friction. A portion of, among the wing plates 131 and 132, the first wing plate 131 may be fixed to the first rotating member 210.

The second rotating member 220 may include a second rotating body 223, a third rail structure 221 (or a third rotating rail structure) that is disposed in the -x-axis direction of the second rotating body 223, and a fourth rail structure 222 (or a fourth rotating rail structure) that is disposed in the x-axis direction of the second rotating body 223. Alternatively, the second rotating member 220 may include an opposite side (e.g., a part (e.g., the third rail structure 221) that is fastened to the second rail 232 and then is fastened such that a hinge movement is allowed) of the fixing bracket 230, and one side (e.g., a part (e.g., the fourth rotating rail structure 222 coupled to the sixth rail 341) of the fourth link member 340. In the second rotating member 220, while the fourth link member 340 coupled to the second housing 120 performs a hinge operation (is rotated clockwise or counterclockwise), the third rail structure 221 fastened to the fixing bracket 230 is rotated in its place, and the fourth rotating rail structure 222 coupled to the fourth link member 340 is rotated (or slid) in the fourth link member 340 (e.g., the sixth rail 341) while being moved in one direction (e.g., counterclockwise while the electronic device is folded from the open state or clockwise while the electronic device 100 is unfolded from the closed state). The second rotating body 223 may include a structure (e.g., at least one hole that pass upward and downward) that may be coupled to the second wing plate 132. Similar to the first rotating member 210, the second rotating member 220 may generate friction with the fixing bracket 230 and the fourth link member 340 while the hinge operation is repeated or performed, and may be formed of a material (e.g., a metal material) of a specific strength or higher to withstand the friction. For example, the second rotating member 220 may be formed of the same material as that of the first rotating member 210. A portion of, among the wing plates 131 and 132, the second wing plate 132 may be fixed to the second rotating member 220.

The second rotating member 220 may be moved in a direction that is opposite to that of the first rotating member 210. For example, while the first rail structure 211 of the first rotating member 210 is rotated counterclockwise in its place (that is, about its axis), the third rail structure 221 of the second rotating member 220 may be rotated clockwise in its place (about its axis).

While the second rail structure 212 of the first rotating member 210 is rotated counterclockwise, the second rail structure 212 may be slid (the sliding is relative, and the fourth rail 321 of the second link member 320 is slid clockwise with respect to the second rail structure 212) counterclockwise in the fourth rail 321 (or the second link rail or the first rotating rail) of the second link member 320. While the second rail structure 212 is slid while being rotated, the fourth rotating rail structure 222 of the second rotating member 220 is rotated counterclockwise, and may be slid (the sliding is relative, and the sixth rail 341 of the fourth link member 340 is slid clockwise with respect to the fourth rotating rail structure 222) counterclockwise in the sixth rail 341 of the fourth link member 340.

A first axis corresponding to a reference, about which the first rail structure 211 of the first rotating member 210 is rotated, and a fifth axis corresponding to a reference, about which the third rail structure 221 of the second rotating member 220 is rotated, may be fixing axes, about which the rail structures (the first rail structure 211 and the third rail structure 221) are rotated in their places. The first axis (or the first axis 711 of FIG. 7) may be an imaginary axis that is formed as the first rail structure 211 is rotated along the first rail 231 of the fixing bracket 230. The fifth axis (or the fifth axis 715 of FIG. 7) may be an imaginary axis that is formed as the third rail structure 221 rotates along the second rail 232 of the fixing bracket 230.

A second axis corresponding to a reference, about which the second rail structure 212 of the first rotating member 210 is rotated, and a sixth axis corresponding to a reference, about which the fourth rotating rail structure 222 of the second rotating member 220 is rotated, may be movement axes that are formed as the rail structures (the second rail structure 212 and the fourth rotating rail structure 222) is moved. The second axis (or the second axis 712 of FIG. 7) is an imaginary axis that is formed as the second rail structure 212 is slid or rotated in the fourth rail 321 while the second link member 320 is moved. The sixth axis (or the sixth axis 716 of FIG. 7) is an imaginary axis that is formed as the fourth rotating rail structure 222 is slid or rotated in the sixth rail 341 while the fourth link member 340 is moved.

The first link member 310 may fix the first arm member 410 to the first housing 110 and support a rotating movement (or a sliding movement) of the first arm member 410. The first link member 310 includes a structure on which a portion of the first arm member 410 is seated. The first link member 310 may include a first link body 312. The first link member may include an eleventh link side wall 313 and a twelfth link side wall 314 that extend in the z-axis direction on opposite sides (e.g., y-axis and -y-axis peripheries) of the first link body 312. An empty space may be formed between the eleventh link side wall 313 and the twelfth link side wall 314. A third rail 311 (or a first arm rail or a first link rail) that protrudes into the empty space between the eleventh link side wall 313 and the twelfth link side wall 314 may be formed. The third rail 311 may be fastened to the fifth rail structure 411 (or the first arm rail structure) of the first arm member 410. The fifth rail structure 411 of the first arm member 410 may be seated in the empty space to guide the rotation or sliding movement of the fifth rail structure 411. The first link member 310 may include a first link connecting part 315 that protrudes in the y-axis direction from one side (e.g., the eleventh link side wall 313) of the first link body 312. In a process of fixing the first link member 310 and the second link member 320 to the first housing 110, the first link connecting part 315 may be coupled or fastened to the second link connecting part of the second link member 320 in the y-axis direction. A structure (e.g., at least one hole or groove) that is used to fix the first link member 310 to the first housing 110 may be formed in at least any one of the first link connecting part 315, the eleventh link side wall 313, and the twelfth link side wall 314. As an example, a structure (e.g., at least one or groove) that is used to fix the first link member 310 to the first housing 110 may be formed in the first link connecting part 315 and the twelfth link side wall 314.

The second link member 320 may support the rotating movement (or sliding movement) of the first rotating member 210 while fixing the first rotating member 210 to the first housing 110. The second link member 320 includes a structure in which a portion of the first rotating member 210 is seated. The second link member 320 includes a second link body 322, and a twenty first link side wall 323 and a twenty second link side wall 324 that extend in the z-axis direction from opposite sides (e.g., y-axis and -y-axis peripheries) of the second link body 322. An empty space may be formed between the twenty first link side wall 323 and the twenty second link side wall 324, and fourth rails 321 that protrude into the empty space between the twenty first link side wall 323 and the twenty second link side wall 324 may be formed in the twenty first link side wall 323 and the twenty second link side wall 324, respectively. The fourth rails 321 may be fastened to the second rail structure 212 of the first rotating member 210, respectively. The second rail structure 212 of the first rotating member 210 may be seated in the empty space to guide the rotation or sliding movement of the second rail structure 212. The second link member 320 may include a second link connecting part 325 that protrudes in the -y-axis direction from an opposite side (e.g., the twenty first link side wall 323) of the second link body 322. In a process of fixing the first link member 310 and the second link member 320 to the first housing 110, the second link connecting part 325 may be coupled or fastened to the first link connecting part 315 of the first link member 310 in the -y-axis direction. A structure (e.g., at least one hole or groove) that is used to fix the second link member 320 to the second housing 120 may be formed in at least any one of the second link connecting part 325, the twenty first link side wall 323, and the twenty second link side wall 324. As an example, a structure (e.g., at least one hole or groove) that is used to fix the second link member 320 to the first housing 110 may be formed in the second link connecting part 325 and the twenty first link side wall 323.

The third link member 330 may support the rotating movement (or sliding movement) of the second arm member 420 while fixing the second arm member 420 to the second housing 120. The third link member 330 may support the rotating movement (or sliding movement) of the second arm member 420 while fixing the second arm member 420 to the second housing 120. The third link member 330 includes a structure, in which a portion of the second arm member 420 is seated. The third link member 330 may include a third link body 332, and a thirty first link side wall 333 and a thirty second link side wall 334 that extend in the z-axis direction from opposite sides (e.g., y-axis and -y-axis peripheries) of the third link body 332. An empty space may be formed between the thirty first link side wall 333 and the thirty second link side wall 334, and fifth rails 331 (or the third link rail or the second arm rail) that protrude into the empty space between the thirty first link side wall 333 and the thirty second link side wall 334 may be formed in the thirty first link side wall 333 and the thirty second link side wall 334, respectively. The fifth rails 331 may be fastened to the sixth rail structure 421 (or the second arm rail structure) of the second arm member 420. The sixth rail structure 421 of the second arm member 420 is seated in the empty space to guide the rotation or sliding movement of the sixth rail structure 421. The third link member 330 may include a third link connecting part 335 that protrudes in the y-axis direction from one side (e.g., the thirty first link side wall 333) of the third link body 332. In a process of fixing the third link member 330 and the fourth link member 340 to the second housing 120, the third link connecting part 335 may be coupled or fastened to the fourth link connecting part 345 of the fourth link member 340 in the y-axis direction. A structure (e.g., at least one hole or groove) that is used to fix the third link member 330 to the second housing 120 may be formed in at least any one of the third link connecting part 335, the thirty first link side wall 333, and the thirty second link side wall 334. As an example, a structure (e.g., at least one hole or groove) that is used to fix the third link member 330 to the second housing 120 may be formed in the third link connecting part 335 and the thirty second link side wall 334.

The fourth link member 340 may support the rotating movement (or sliding movement) of the second rotating member 220 while fixing the second rotating member 220 to the second housing 120. The fourth link member 340 includes a structure, in which a portion of the second rotating member 220 is seated therein. The fourth link member 340 may include a fourth link body 342, and a forty first link side wall 343 and a fourth second link side wall 344 that extend in the z-axis direction from opposite sides (e.g., y-axis and -y-axis peripheries) of the fourth link body 342. An empty space is formed between the forty first link side wall 343 and the forty second link side wall 344, and sixth rails 341 (or the fourth link rail or the second rotating rail) that protrude into an empty space between the forty first link side wall 343 and the forty second link side wall 344 may be formed in the forty first link side wall 343 and the forty second link side wall 344, respectively. The sixth rails 341 may be fastened to the fourth rail structure 222 of the second rotating member 220, respectively. The fourth rail structure 222 of the second rotating member 220 may be seated in the empty space to guide the rotating movement or sliding movement of the fourth rail structure 222. The fourth link member 340 may include a fourth link connecting part 345 that protrudes in the -y-axis direction from an opposite side (e.g., the forty first link side wall 343) of the fourth link body 342. In a process of fixing the fourth link member 340 and the third link member 330 to the second housing 120, the fourth link connecting part 345 may be coupled or fastened to the third link connecting part 335 of the third link member 330 in the -y-axis direction. A structure (e.g., at least one hole or groove) that is used to fix the second link member 320 to the second housing 120 may be formed in at least any one of the forty first link side wall 343 and the forty second link side wall 344. As an example, a structure (e.g., at least one hole or groove) that is used to fix the fourth link member 340 to the second housing 120 may be formed in the fourth link connecting part 345 and the forty first link side wall 343.

The first arm member 410 includes a structure (e.g., the fifth rail structure 411 or the first arm rail structure) that is fastened to the first link member 310 coupled to the first housing 110. The fifth rail structure 411 may be slid counterclockwise and clockwise in the third rail 311 formed on the first link member 310. The first arm member 410 may include a first arm body 413, and a first shaft holding part 412 that extends from the first arm body 413 in the x-axis direction and may be fastened to the first shaft 241. A first main gear 431 may be disposed on one side of the first shaft holding part 412. A hole that passes in the y-axis or -y-axis direction may be formed in the first shaft holding part 412 such that the first shaft 241 may be held therein. The first shaft holding part 412 may include a first cam structure 414 that is engaged with the cam member 360. The first cam structure 414 may be disposed on a side wall of the first shaft holding part 412 in the -y axis direction. The first arm member 410 may be rotated counterclockwise and clockwise with respect to an actual axis of the first shaft 241.

The second arm member 420 includes a structure (e.g., the sixth rail structure 421) that is fastened to the third link member 330 coupled to the second housing 120. The sixth rail structure 421 may be slid counterclockwise and clockwise in the fifth rail 331 formed in the third link member 330. The second arm member 420 may include a second arm body 423, and a second shaft holding part 422 that extends from the second arm body 423 in the -x-axis direction and is fastened to the second shaft 242. A second main gear 432 may be disposed on one side of the second shaft holding part 422. A hole that passes in the y-axis or -y-axis direction may be formed in the second shaft holding part 422 such that the second shaft 242 may be held therein. The second shaft holding part 422 may include a second cam structure 424 that is engaged with the cam member 360. The second cam structure 424 may be disposed on a side wall of the second shaft holding part 422 in the -y axis direction. The second arm member 420 may be rotated clockwise and counterclockwise with respect to an actual axis of the second shaft 242.

The cam member 360 may include a first cam 361 that is engaged with the first cam structure 414 of the first arm member 410, a second cam 362 that is engaged with the second cam structure 424 of the second arm member 420, and a support 363 that connects the first cam 361 and the second cam 362. A through-hole, through which the first shaft 241 may pass, may be formed at a center of the first cam 361, and a through-hole, through which the second shaft 242 may pass, may be formed at a center of the second cam 362. A first elastic member 281 and a second elastic member 282 may be disposed between the cam member 360 and the shaft bracket 270 and may provide an elastic force that pushes the cam member 360 toward the first cam structure 414 and the second cam structure 424.

The shaft bracket 270 may include a fixing structure 273 (e.g., a through-hole in the z-axis direction) that may fix the first hinge structure 200a to the hinge housing 150. Furthermore, the shaft bracket 270 may include shaft holding holes 271 and 272, into which the first shaft 241 and the second shaft 242 disposed in the y-axis direction may be inserted. Sizes of the shaft holding holes 271 and 272 of the shaft bracket 270 may be larger than those of the first shaft 241 and the second shaft 242. The first shaft 241 may be inserted and held in the first shaft holding hole 271, and the second shaft 242 may be inserted and held in the second shaft holding hole 272.

The gear bracket 260 may be disposed between the cam member 360 and at least one idle gear 233a and 233b. The gear bracket 260 may include, for example, holes, through which the first shaft 241 and the second shaft 242 pass and are held, and holding holes, through which one side of at least one idle gear 233a and 233b is held.

The first main gear 431 may be disposed in a gear pattern on one side of the first shaft holding part 412 of the first arm member 410. The first main gear 431 may be gear-coupled to the first idle gear 433. The second main gear 432 may be disposed in a gear pattern on one side of the second shaft holding part 422 of the second arm member 420. The second main gear 432 may be gear-coupled to the second idle gear 434. The first idle gear 433 and the second idle gear 434 may be gear-coupled to each other. As the first main gear 431, the first idle gear 433, the second idle gear 434, and the second main gear 432, which have been described above, are geared with each other, the first arm member 410 and the second arm member 420 may interlock with each other.

The plurality of coupling members 291 and 292 may include a first coupling member 291 and a second coupling member 292. The first coupling member 291 may fix one side of the first shaft 241 that protrudes in the -y-axis direction via the first shaft holding hole 271. The second coupling member 292 may fix one side of the second shaft 242 that protrudes in the -y-axis direction via the second shaft holding hole 272. The above-described at least one coupling members 291 and 292 may, for example, include a shape of an "E" ring.

A plurality of ring structures 251 and 252 may be disposed between the plurality of coupling members 291 and 292 and the shaft bracket 270, respectively. The plurality of ring structures 251 and 252 may include a first washer ring 251 that may prevent separation of the first coupling member 291, and a second washer ring 252 that may prevent separation of the second coupling member 292. The first washer ring 251 may include a first protruding region 253 that protrudes in the -y-axis direction, and thus, the first protruding region 253 may be used as a guide member when the center bar 170 and the first hinge structure 200a are assembled. The second washer ring 252 may include a second protruding region 254 that protrudes in the -y-axis direction, and thus, the second protruding region 253 may be used as a guide member when the center bar 170 and the first hinge structure 200a are assembled.

The plurality of support members may be formed to contact the rail structures 212, 222, 411, and 412 that are coupled to the plurality of link members 310, 320, 330, and 340. The plurality of support members may include a first support member 510, a second support member 520, a third support member 530, and a fourth support member 540.

The first support member 510 may be disposed to contact an opposite surface of the fifth rail structure 411 between one surface (e.g., a surface that faces the z axis) of the first housing 110 and an opposite surface (e.g., a surface that faces the -z axis) of the fifth rail structure 411. The first support member 510 may include a first fixing portion 512 and a first contact portion 511, the first contact portion 511 configured to apply a force in the first direction to the opposite surface of the fifth rail structure 411. The first fixing portion 512 may be fixed to at least any one of the first housing 110 and the first link member 310 through a process using welding, an adhesive member, or screw fastening. As an example, the first fixing portion 512 may be formed in a shape of a flat plate depending on a shape of a surface, on which it is seated on the first housing 110 when being fixed to the first housing 110. According to an embodiment, when the first fixing portion 512 is fixed to the first link member 310, it may be formed in an "L" shape depending on a shape of the surface, on which it is seated on the first link member 310. The first contact portion 511 may be formed to be curved between the fifth rail structure 411 and the first fixing portion 512 to provide an elastic force acting on the fifth rail structure and the first fixing portion. At least a portion of the first contact portion 511 may be formed in a "C" shape. At least a portion of the first contact portion 511 may be elastically pressed while contacting the fifth rail structure 411, and may maintain contact with the fifth rail structure 411 by using an elastic force (a repulsive force).

The second support member 520 may be disposed between one surface of the first housing 110 and an opposite surface of the second rail structure 212 to contact the opposite surface of the second rail structure 212. The second support member 520 may include a second fixing portion 522 and a second contact portion 521, the second contact portion 521 configured to apply a force in a second direction that is opposite to the first direction to the opposite surface of the second rail structure 212. The second fixing portion 522 may be fixed to at least any one of the second link member 320 and the first housing 110 through a process using welding, an adhesive member, or screw fastening. As an example, the second fixing portion 522 may be formed in a shape of a flat plate depending on a shape of a surface, on which it is seated on the first housing 110, when being fixed to the first housing 110. According to an embodiment, when the second fixing portion 522 may be formed in an "L" shape depending on a shape of the surface, on which it is seated on the second link member 320 when it is fixed to the second link member 320. The second contact portion 521 may be formed to be curved between the second rail structure 212 and the second fixing portion 522 to provide an elastic force acting on the second rail structure and the second fixing portion. At least a portion of the second contact portion 521 may be formed in a "C" shape. At least a portion of the second contact portion 521 may be elastically pressed while contacting the second rail structure 212, and may maintain contact with the second rail structure 212 by using an elastic force (a repulsive force).

The third support member 530 may be disposed between one surface of the second housing 120 and an opposite surface of the sixth rail structure 421 to contact the opposite surface of the sixth rail structure 421. The third support member 530 may include a third fixing portion 532 and a third contact portion 531 to apply a force in a third direction to the opposite surface of the sixth rail structure 421. The third fixing portion 532 may be fixed to at least any one of the second housing 120 and the third link member 330 through a process using welding, an adhesive member, or screw fastening. As an example, the third fixing portion 532 may be formed in a shape of a flat plate depending on a shape of a surface, on which it is seated on the first housing 110, when being fixed to the second housing 120. According to an embodiment, when the third fixing portion 532 is fixed to the third link member 330, it may be formed in an "L" shape depending on a shape of a surface, on which it is seated on the third link member 330. The third contact portion 531 may be formed to be curved between the sixth rail structure 421 and the third fixing portion 532 to provide an elastic force acting on the sixth rail structure and the third fixing portion. At least a portion of the third contact portion 531 may be formed in a "C" shape. At least a portion of the third contact portion 531 may be elastically pressed while contacting the sixth rail structure 421, and may maintain contact with the sixth rail structure 421 by using an elastic force (a repulsive force).

The fourth support member 540 may be disposed between one surface of the second housing 120 and an opposite surface of the fourth rotating rail structure 222 to contact the opposite surface of the fourth rotating rail structure 222. The fourth support member 540 may include a fourth fixing portion 542 and a second contact portion 521 to apply a force in a fourth direction that is opposite to the third direction to the opposite surface of the fourth rotating rail structure 222. The fourth fixing portion 542 may be fixed to at least any one of the fourth link member 340 and the second housing 120 through a process using welding, an adhesive member, or screw fastening. As an example, the fourth fixing portion 542 may be formed in a shape of a flat plate depending on a shape of a surface, on which it is seated in the second housing 120, when being fixed to the second housing 120. According to an embodiment, when the fourth fixing portion 542 is fixed to the fourth link member 340, it may be formed in an "L" shape, depending on a shape of a surface on which the fourth link member 340 is seated. The fourth contact portion 541 may be formed to be curved between the fourth rotating rail structure 222 and the fourth fixing portion 542 to provide an elastic force. At least a portion of the fourth contact portion 541 may be formed in a "C" shape. At least a portion of the fourth contact portion 541 may be elastically pressed while contacting the fourth rotating rail structure 222, and may maintain contact with the fourth rotating rail structure 222 by using an elastic force (a repulsive force).

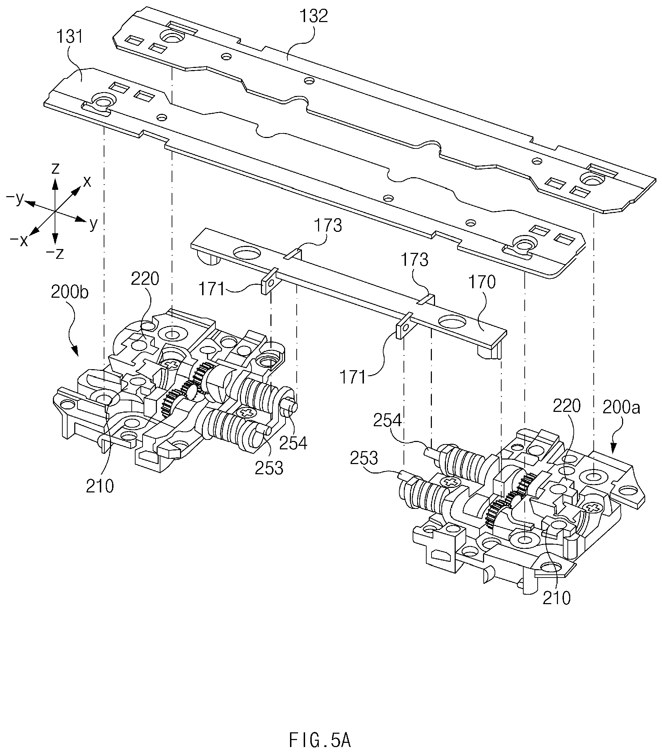

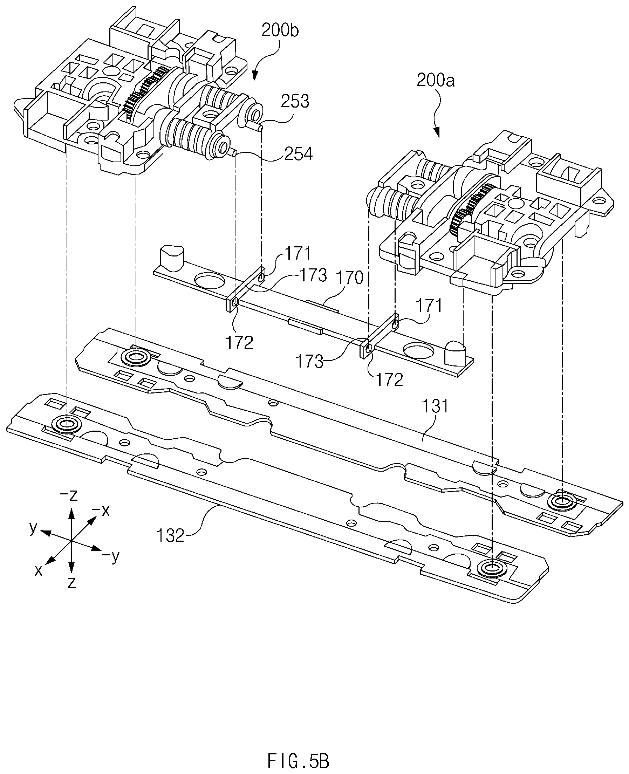

FIG. 5A is a front view of an exploded perspective view of a hinge module according to an embodiment, and FIG. 5B is a rear view of an exploded perspective view of the hinge module according to an embodiment.

Referring to FIGS. 1 to 5B, the hinge module may include hinge structures 200a and 200b, wing plates 131 and 132, and a center bar 170.

At least one hinge structure 200a or 200b may be disposed between the first housing 110 and the second housing 120 when the electronic device 100 is in the open state. In the at least one hinge structure 200a and 200b, the hinge structures 200a and 200b that are disposed in the y-axis periphery and -y-axis periphery and the hinge structure 200c that are disposed at a center may have slightly different shapes or structures, but rotating members may be included in common.

Referring to the drawing, a first rotating member 210 and a second rotating member 220 may be disposed in each of the first hinge structure 200a and the second hinge structure 200b, respectively. The first rotating member 210 and the second rotating member 220 may be coupled to the wing plates 131 and 132, respectively. For example, the first rotating member 210 may be fastened to the first wing plate 131, and the second rotating member 220 may be fastened to the second wing plate 132. The first wing plate 131 and the second wing plate 132 may be disposed to be spaced apart from each other at a specific interval or distance. The first wing plate 131 and the second wing plate 132 may be disposed to be spaced apart from each other by a distance corresponding to or of an x-axis width of the center bar 170.

The center bar 170 may be disposed between the first hinge structure 200a and the second hinge structure 200b. The center bar 170 may include a plurality of guide structures 173 that protrude toward the first hinge structure 200a and the second hinge structure 200b, respectively. At least any one of the plurality of guide structures 173 of the center bar 170 may include a first through-hole 171 (e.g., a hole that passes in the y-axis direction) and a second through-hole 172 (e.g., a hole that passes in the y-axis direction. The first protruding regions 253 formed in the first hinge structure 200a and the second hinge structure 200b may be inserted into the first through-holes 171. The second protruding regions 254 formed in the first hinge structure 200a and the second hinge structure 200b may be inserted into the second through-holes 172. Accordingly, the center bar 170 may be fastened to the first hinge structure 200a and the second hinge structure 200b. A position of the center bars 170 is not changed in the open state, the closed state, and the intermediate state of the electronic device, and may be the same at a fixed position. The center bars 170 may correspond to the center of the electronic device in the open state, the closed state, and the intermediate state of the electronic device.

The first wing plate 131 may overlap the first hinge structure 200a and the second hinge structure 200b upward and downward when viewed in the z-axis direction, and the first wing plate 131 may be coupled to the first rotating members 210 of the first hinge structure 200a and the second hinge structure 200b, respectively.

The second wing plate 132 may overlap the first hinge structure 200a and the second hinge structure 200b upward and downward when viewed in the z-axis direction, and the second wing plate 132 may be fastened to the second rotating members 220 of the first hinge structure 200a and the second hinge structure 200b, respectively.

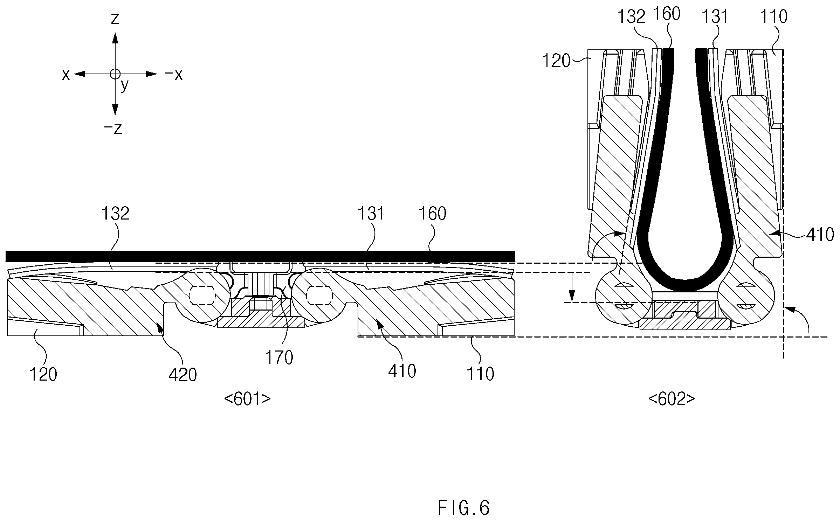

FIG. 6 is a view illustrating the open state and the closed state of the hinge structure included in the electronic device according to an embodiment. In FIG. 6, view 601 illustrates an example of a cross section obtained cut at a position, in which the arm members 410 and 420 are disposed in the open state of the hinge structure 200, and view 602 illustrates an example of a cross section cut at a position, in which the arm members 410 and 420 are disposed in the closed state of the hinge structure 200.

Referring to FIG. 6, in view 601, the electronic device 100 may be disposed in the open state. When the electronic device 100 is in the open state, one surface (e.g., a surface, on which a first region 161 of the display 160 is seated) of the first housing 110 and one surface (e.g., a surface, on which a second region 162 of the display 160 is seated) of the second housing 120 may be disposed to face the z axis in the same way. When the electronic device 100 is in the open state, a third region 163 that is disposed between the first region 161 and the second region 162 of the display 160 may be maintained flat.

In view 602, the electronic device 100 may be disposed in the closed state. When the electronic device 100 is in the closed state, one surface (e.g., a surface, on which the first region 161 of the display 160 is seated) of the first housing 110 and one surface (e.g., a surface, on which the second region 162 of the display 160 is seated) of the second housing 120 may be disposed to face each other. A convex portion of the third region 163 (or a folding region) disposed between the first region 161 and the second region 162 of the display 160 may be disposed to face the -z-axis direction.

When the electronic device 100 is in the closed state, a first wing plate portion 131 and a second wing plate portion 132 that are disposed on the first arm member 410 and the second arm member 420 may support a portion of the display 160 in correspondence to the rotation of the arm members 410 and 420.

When the electronic device 100 is changed from the open state to the closed state, the first wing plate 131 and the second wing plate 132 may be disposed adjacent to each other with the display 160 being interposed therebetween. When the electronic device 100 is changed from the open state to the closed state, the wing plates 131 and 132 may be rotated clockwise or clockwise according to a hinge operation of the at least one hinge structure 200a and 200b. For example, while the first wing plate 131 is rotated counterclockwise, the second wing plate 132 may be rotated clockwise, and while the first wing plate 131 is rotated clockwise, the second wing plate 132 may be rotated counterclockwise.

FIG. 7 is a view illustrating an example of formation of an axis of the hinge structure 200 in the open state included in an electronic device according to an embodiment. In FIG. 7, view 701 is a view illustrating an example of a cross section of the hinge structure 200, taken along line A-A' in FIG. 3. For example, view 701 illustrates an example of a cross section cut at a position in which the rotating members 210 and 220 are disposed in the hinge structure 200. FIG. 7, view 702 is a view illustrating an example of a cross section of the hinge structure 200, taken along line B-B' in FIG. 3. For example, view 702 illustrates an example of a cross section cut at a position, in which the arm members 410 and 420 are disposed in the hinge structure 200.

Referring to FIGS. 1 to 7, the first rail structure 211 of the first rotating member 210 may be fastened to one side (e.g., the first rail 231) of the fixing bracket 230. The third rail structure 221 of the second rotating member 220 may be fastened to an opposite side (e.g., the second rail 232) of the fixing bracket 230. At least portions of the first rail 231 and the second rail 232 of the fixing bracket 230 may be disposed to overlap each other when viewed from one point on the x axis in the y-axis direction. Accordingly, in cross-section A-A', one periphery (e.g., an x-axis periphery) of the first rail structure 211 and one periphery (e.g., a -x-axis periphery) of the third rail structure 221 are disposed to partially overlap each other.

The first rail structure 211 of the first rotating member 210 may be rotated counterclockwise or clockwise in the first rail 231 of the fixing bracket 230 with respect to the first axis 711 (or the first imaginary axis). As the first axis 711 is fixed regardless of a change in the closed state or the open state of the electronic device 100, it may be a first fixing axis of the fixing bracket 230. The second rail structure 212 of the first rotating member 210 may be rotated (or slid) with respect to a second axis 712 (or the second imaginary axis) in the fourth rail 321 of the second link member 320. Then, the second rail structure 212 and the fourth rail 321 may be moved counterclockwise or clockwise in correspondence to rotation of the first link member 310 (e.g., rotated counterclockwise while the electronic device 100 is changed from the open state to the closed state, and rotated clockwise while the electronic device 100 is changed from the closed state to the open state). Accordingly, the second axis 712 may be a movement axis that is moved counterclockwise or clockwise as the second link member 320 is moved.

Similarly, the third rail structure 221 of the second rotating member 220 may be rotated with respect to a fifth axis 715 (or the fourth imaginary axis) while being rotated clockwise or counterclockwise in the second rail 232 of the fixing bracket 230. As the fifth axis 715 is fixed regardless of a change in the closed state or open state of the electronic device 100, it may be the second fixing axis of the fixing bracket 230. The fourth rail structure 222 of the second rotating member 220 may be rotated (or slid) with respect to a sixth axis 716 (or the fourth imaginary axis) in the sixth rail 341 of the fourth link member 340. Then, the fourth rail structure 222 and the sixth rail 341 may be moved clockwise or counterclockwise in correspondence to rotation of the fourth link member 340 (e.g., rotated counterclockwise while the electronic device 100 is changed from the open state to the closed state, and rotated counterclockwise while the electronic device 100 is changed from the closed state to the open state). Accordingly, the sixth axis 716 may be a movement axis that moves counterclockwise or clockwise as the fourth link member 340 is moved.

The first shaft 241 fixed to one side (e.g., a -x-axis periphery the side wall in the -y axis direction) of the fixing bracket 230 may be fastened to the first arm member 410. A portion of the first shaft 241 may be disposed on one side (e.g., a through-hole of the first shaft holding part 412) of the first arm member 410. The first shaft 241 may serve as the third axis 713 (or the first actual axis), about which the first arm member 410 is rotated. The fifth rail structure 411 of the first arm member 410 may be rotated (or slid) with respect to the fourth axis 714 (or the third imaginary axis) in the fifth rail 331 of the first link member 310. Then, the fifth rail structure 411 and the third rail 311 may be moved counterclockwise or clockwise in correspondence to rotation of the third link member 330 (e.g., rotated counterclockwise while the electronic device 100 is changed from the open state to the closed state, and rotated clockwise while the electronic device 100 is changed from the closed state to the open state). Accordingly, the fourth axis 714 may be a movement axis that is moved counterclockwise or clockwise as the first link member 310 is moved.

Similarly, the second shaft 242 fixed to an opposite side (e.g., an x-axis periphery of the side wall in the -y-axis direction) of the fixing bracket 230 may be fastened to the second arm member 420. A portion of the second shaft 242 may be disposed on an opposite side (e.g., a through-hole of the second shaft holding part 422) of the second arm member 420. The second shaft 242 may serve as a seventh axis 717 (or a second actual axis), about which the second arm member 420 is rotated. The sixth rail structure 421 of the second arm member 420 may be rotated (or slid) with respect to an eighth axis 718 (or a sixth imaginary axis) in the fifth rail 331 of the third link member 330. Then, the sixth rail structure 421 and the fifth rail 331 may be moved counterclockwise or clockwise in correspondence to rotation of the third link member 330 (e.g., rotated counterclockwise while the electronic device 100 is changed from the open state to the closed state, and rotated clockwise while the electronic device 100 is changed from the closed state to the open state). Accordingly, the eighth axis 718 may be a movement axis that moves counterclockwise or clockwise as the third link member 330 is moved.

According to an embodiment, the first axis 711 and the fifth axis 715 may be located together on a first xy plane that is parallel to the display 160, and the second axis 712 and the sixth axis 716 may be located together on a second xy plane that is different from the first xy plane while being parallel to the display 160. The fourth axis 714 and the eighth axis 718 may be located on a third xy plane that is different from the second xy plane while being parallel to the display 160. Accordingly, when viewed with respect to the z axis, the first axis 711 and the fifth axis 715 may be formed at positions that are different from those the second axis 712 and the sixth axis 716, and the fourth axis 714 and the eighth axis 718 may be formed in positions that are different from those of the first axis 711 and the fifth axis 715, and the second axis 712 and the sixth axis 716.

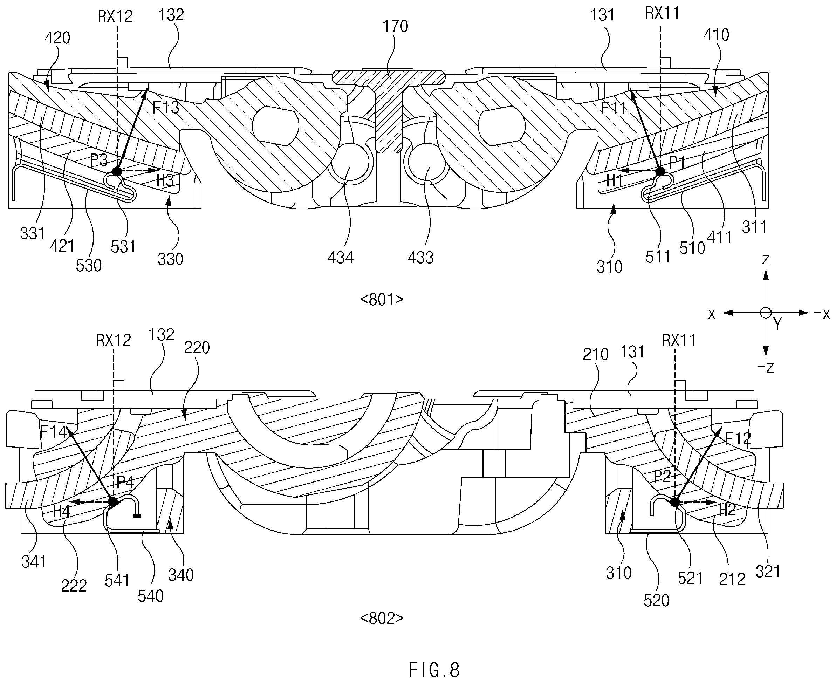

FIG. 8 is a view illustrating an example of a state of the hinge structure and states of the support members that support the arm members and the rotating members in the open state of the electronic device according to an embodiment. FIG. 8, view 801 is a view illustrating an example of the first support member and the third support member that support the arm members when the electronic device is in the open state, and view 802 is a view illustrating an example of the second support member and the fourth support member that support the rotating members when the electronic device is in the open state.

Referring to FIGS. 1 to 8, to change the state of the electronic device, the user may apply an external force to the electronic device. An external force is transmitted to the first link member 310, the second link member 320, the third link member 330, and the fourth link member 340 through the first housing 110 and the second housing 120. The external force transmitted to the first link member 310, the second link member 320, the third link member 330, and the fourth link member 340 may be transmitted to the rails (e.g., the third rail 311, the third rail 311, the fifth rail 331, and the fourth rail 321) of the first link member 310, the second link member 320, the third link member 330, and the fourth link member 340, and the rail structures (e.g., the fifth rail structure 411, the second rail structure 212, the sixth rail structure 421, and the fourth rail structure 222) connected through the rails and the imaginary axes (e.g., the second axis 712, the fourth axis 714, the sixth axis 716, and the eighth axis 718). Furthermore, the external force may be transmitted to a shaft that is rotated with respect to the third axis 713 that is interlocked through the fourth axis 714 and the first link member 310, and the seventh axis 717 that is interlocked through the eighth axis 178 and the fourth link member 340. Due to this external force, a gap may be changed between at least any one of the plurality of rail structures included in the hinge structure, and the rail structures and the rails that are rotated about the rotation axes. In addition, the gap between the rail structures and the rails that are rotated about the rotation axes may be changed due to an assembly deviation or a driving deviation. In an embodiment, a plurality of support members 510, 520, 530, and 540 may be provided to reduce folding movements due to a gap that is changed between the rails and the rail structure.

The plurality of support members 510, 520, 530, and 540 may attach the rail structures 212 and 222 of the rotating members 210 and 220 and the rails 321 and 341 of the link members 320 and 340, and may attach the rail structures 411 and 421 of the arm members 410 and 420 and the rails 311 and 331 of the link members 310 and 330 to remove or reduce movement of the gap, which occurs between the rails and the rail structures. Accordingly, a seesaw movement of the arm members 410 and 420, which occurs by a movement of the gap may be supplemented, and thus, a folding movement caused by the movement of the gap may be reduced or removed.

According to an embodiment, when the electronic device 100 is in the open state, the first link member 310 fastened to the first arm member 410 may contact the first support member 510, and thus, the support member 510 may support the first link member 310. For example, at least a portion of the first contact portion 511 of the first support member 510 may support the fifth rail structure 411 while contacting the fifth rail structure 411. A first application point P1 of the support force that supports the fifth rail structure 411 may be located in the fifth rail structure 411 that contacts a first contact portion 511. When the fifth rail structure 411 and the first contact portion 511 contact each other, a force in a direction F11 that is substantially perpendicular to the first contact portion 511 may be applied to the fifth rail structure 411. Then, a first horizontal component of the force applied to the fifth rail structure 411 may be parallel to one surface of the first wing plate 131, and may be a first horizontal direction H1 that faces a central portion (the idle gears 433 and 434 and the third link member 330) of the electronic device. The first horizontal direction H1 may face a negative direction with respect to a first reference axis RX11 that is perpendicular to a first wing plate 131 (or the first region 161 of the display 160, or the first housing 110).

When the electronic device 100 is in the open state, the second link member 320 fastened to the first rotating member 210 contacts the second support member 520, and thus, the second support member 520 may support the second link member 320. For example, at least a portion of the second contact portion 521 of the second support member 520 may support the second rail structure 212 while contacting the second rail structure 212. A second application point P2 of a support force that supports the second rail structure 212 may be located on the second rail structure 212 that contacts the second contact portion 521. When the second rail structure 212 and the second contact portion 521 contact each other, a force in a direction F12 that is substantially perpendicular to the second contact portion 521 may be applied to the second rail structure 212. Then, a second horizontal component of the force applied to the second rail structure 212 may be parallel to one surface of the first wing plate 131 (or the first region 161 of the display 160) and may be a second horizontal direction H2 that is an opposite direction to the first horizontal direction H1. The second horizontal direction H2 may face a positive direction with respect to the first wing plate 131 (or the first region 161 of the display 160, or the first reference axis RX11 that is perpendicular to the first housing 110).

When the electronic device 100 is in the open state, a direction F11 of a force that is applied to the fifth rail structure 411 and a direction F12 of a force that is applied to the second rail structure 212 may be disposed to be skewed with respect to the first reference axis RX11. The first arm member 410 including the fifth rail structure 411 may be strongly attached to the third rail 311 of the first link member 310 by the first support member 510. A strong attachment may be formed between the first arm member 410 including the fifth rail structure 411 and the third rail 311 of the first link member 310. A rail gap (or an assembly gap or a driving gap) between the first arm member 410 (e.g., the fifth rail structure 411 of the first arm member 410) and the first link member 310 (e.g., the third rail 311 of the first link member 310) may be removed or reduced. The first rotating member 210 including the second rail structure 212 may be attached to the fourth rail 321 of the second link member 320 by the second support member 520. A movement of a gap between the first rotating member 210 and the second link member 320 may be removed or reduced. Accordingly, a folding movement due to gap flow may be reduced or removed. Furthermore, because the direction F11 of the force applied to the fifth rail structure 411 and the direction F12 of the force applied to the second rail structure 212 are disposed to be skewed with respect to the first reference axis RX11, the seesaw movement of the first arm member 410 caused by the movement of the gap may be supplemented or reduced. Meanwhile, the (strong) attachment formed between a first object (e.g., the first arm member 410) and a second object (e.g., third rail 311) may mean that at least a portion of the first object and at least a portion of the second object third rail 311 may be in face-to-face contact.

When the electronic device 100 is in the open state, the third link member 330 fastened to the second arm member 420 may contact the third support member 530, and thus, the third support member 530 may support the third link member 330. For example, at least a portion of the third contact portion 531 of the third support member 530 may support the sixth rail structure 421 while contacting the sixth rail structure 421. A third application point P3 of a support force that supports the sixth rail structure 421 may be located on the sixth rail structure 421 that contacts the third contact portion 531. When the sixth rail structure 421 and the third contact portion 531 contact each other, a force in a direction F13 that is substantially perpendicular to the third contact portion 531 may be applied to the sixth rail structure 421. Then, a third horizontal component H3 of a force applied to the sixth rail structure 421 may be parallel to one surface of the second wing plate 132 (or the second region 162 of the display 160), and may be a third horizontal direction H3 that faces a central portion (the idle gears 433 and 434 or the first link member 310) of the electronic device. The third horizontal direction H3 may face a positive direction with respect to the second reference axis RX12 that is perpendicular to the second wing plate 132 (or the second region 162 of the display 160, or the second housing 120). The second reference axis RX12 may be formed in parallel to the first reference axis RX11.

When the electronic device 100 is in the open state, the fourth link member 340 fastened to the second rotating member 220 may contact the fourth support member 540, and thus, the fourth support member 540 may support the fourth link member 340. For example, at least a portion of the fourth contact portion 541 of the fourth support member 540 may support the fourth rotating rail structure 222 while contacting the fourth rotating rail structure 222. A fourth application point P4 of a support force that supports the fourth rotating rail structure 222 may be located on the fourth rotating rail structure 222 that contacts the fourth contact portion 541. When the fourth rotating rail structure 222 and the fourth contact portion 541 contact each other, a force in a direction F14 that is substantially perpendicular to the fourth contact portion 541 may be applied to the fourth rotating rail structure 222. Then, a fourth horizontal component H4 of the force applied to the fourth rotating rail structure 222 may be parallel to the second wing plate 132 (or the second region 162 of the display 160), and may be a fourth horizontal direction H4 that is an opposite direction to the third horizontal direction H3. The fourth horizontal direction H4 may a negative direction with respect to the second reference axis RX12 that is perpendicular to the second wing plate 132 (or the second region 162 of the display 160 or the second housing 120).

When the electronic device 100 is in the open state, a direction F3 of the force applied to the sixth rail structure 421 and a direction F4 of the force applied to the fourth rotating rail structure 222 may be disposed to be skewed with respect to the second reference axis RX2. The second arm member 420 including the sixth rail structure 421 may be strongly attached to the fifth rail 331 of the third link member 330 by the third support member 530. A movement of a gap between the second arm member 420 (e.g., the sixth rail structure 421 of the second arm member) and the second link member 320 (e.g., the fourth rail 321 of the second link member) may be removed or reduced. The second rotating member 220 including the fourth rotating rail structure 222 may be strongly attached to the sixth rail 341 of the fourth link member 340 by the fourth support member 540. A movement of a gap between the second rotating member 220 and the fourth link member 340 may be removed or reduced. Accordingly, a folding movement due to the movement of the gap may be reduced or removed. Furthermore, the direction F3 of the force applied to the sixth rail structure 421 and the direction F4 of the force applied to the fourth rotating rail structure 222 are disposed to be skewed with respect to the second reference axis RX2, and thus, a seesaw movement of the second arm member 420, which occurs due to the movement of the gap may be supplemented or reduced.

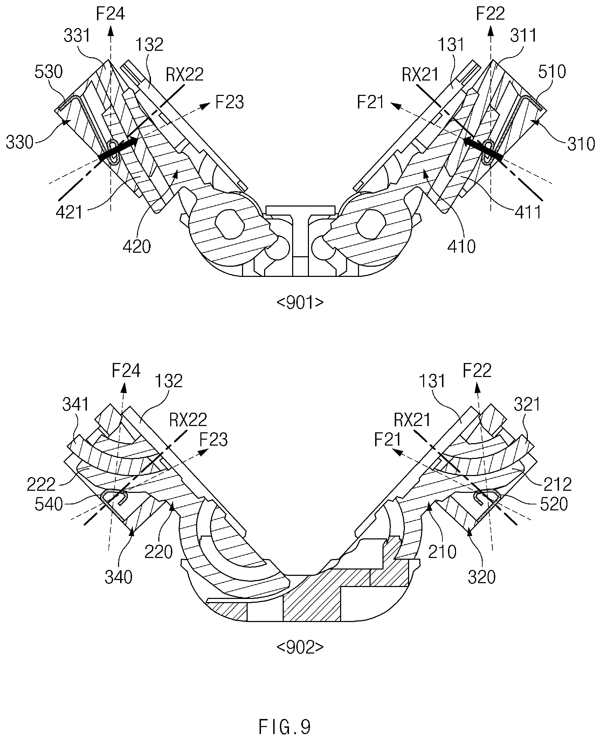

FIG. 9 is a view illustrating an example of a state of the hinge structure and states of the support members that support the arm members and the rotating members in an intermediate state of the electronic device according to an embodiment. In FIG. 9, view 901 is a view illustrating an example of the first support member and the third support member that support the arm members when the electronic device is in the intermediate state, and view 902 is a view illustrating an example of the second support member and the fourth support member that support the rotating members when the electronic device is in the intermediate state. The intermediate state of the electronic device is a state between an open (or substantially open) state and a closed (or substantially closed) state.

Referring to FIGS. 1 to 9, the electronic device 100 may be disposed in the intermediate state. When the electronic device 100 is in the intermediate state, one surface (e.g., a surface, on which the first region 161 of the display 160 is seated) of the first wing plate 131 and one surface (e.g., a surface, on which the second region 162 of the display 160 is seated) of the second wing plate 132 may be disposed at a predetermined angle with respect to each other. One surface of the first region 101 and one surface of the second region 102 of the display 160 may form an angle that is greater than that in the closed state and smaller than that in the open state.

When the electronic device 100 is in the intermediate state, the first link member 310 and the second link member 320 fixed to the first housing 110 may be disposed to be symmetrical to the third link member 330 and the fourth link member 340 with respect to a central portion (e.g., a folded portion of the display 160, or a space between the first wing plate 131 and the second wing plate 132) of the electronic device. When the electronic device 100 is in the intermediate state, a distance between an end of the first link member 310 (or the second link member 320) in the x-axis direction and an end of the third link member 330 (or the fourth link member 340) in the -x-axis direction may be a second distance (or a distance that is smaller than the first distance).

When the electronic device 100 is in the intermediate state, a direction F21 of the force applied to the fifth rail structure 411 by the first support member 510 and a direction F22 of the force applied to the second rail structure 212 by the second support member 520 may be skewed with respect to the first reference axis RX21. A direction F23 of the force applied to the sixth rail structure 421 by the third support member 530 and a direction F24 of the force applied to the fourth rotating rail structure 222 by the fourth support member 540 may be disposed to be skewed with respect to the second reference axis RX22.

When the electronic device 100 is in the intermediate state, a force in the direction F21 that is substantially perpendicular to the first contact portion 511 of the first support member 510 may be applied to the fifth rail structure 411. A force in the direction F21 between the x axis and the z axis, which faces the second wing plate 132 disposed on the second arm member 420, may be applied to the fifth rail structure 411. When the electronic device 100 is in the closed state, the force in the direction F22 that is substantially perpendicular to the second contact portion 521 of the second support member 520 may be applied to the second rail structure 212. The force in the direction F22 that is close to the z axis may be applied to the second rail structure 212 while being screwed to the direction F31 of the force applied to the fifth rail structure 411.

When the electronic device 100 is in the intermediate state, the force in the direction F23 that is substantially perpendicular to the third contact portion 531 of the third support member 530 may be applied to the sixth rail structure 421. The force in the direction F23 between the -x axis and the z axis, which faces the first wing plate 131 disposed on the first arm member 410, may be applied to the sixth rail structure 421. When the electronic device 100 is in the closed state, the force in the direction F24 that is substantially perpendicular to the fourth contact portion 541 of the fourth support member 540 may be applied to the fourth rotating rail structure 222. The force in the direction F24 that is close to the z-axis while being skewed to the direction F33 of the force applied to the sixth rail structure 421 may be applied to the fourth rotating rail structure 222.

When the electronic device 100 is in an intermediate state, the first arm member 410 including the fifth rail structure 411 may be strongly attached to the third rail 311 by the first support member 510. A rail gap (or a gap or a driving gap) between the first arm member 410 (e.g., the fifth rail structure 411 of the first arm member 410) and the first link member 310 (e.g., the third rail 311 of the first link member 310) may be removed or reduced. The first rotating member 210 including the second rail structure 212 may be strongly attached to the fourth rail 321 of the second link member 320 by the second support member 520. A movement of the gap between the first rotating member 210 and the second link member 320 may be removed or reduced. Accordingly, the seesaw movement of the first arm member 410 that occurs by the movement of the gap may be supplemented, and thus, a folding movement caused by the gap flow may be reduced or removed.

When the electronic device 100 is in the intermediate state, the second arm member 420 including the sixth rail structure 421 may be strongly attached to the fifth rail 331 of the third link member 330 by the third support member 530. A rail gap (or a gap or a driving gap) between the second arm member 420 (e.g., the sixth rail structure 421 of the second arm member) and the second link member 320 (e.g., the fourth rail 321 of the second link member) may be removed or reduced. The second rotating member 220 including the fourth rotating rail structure 222 may be strongly attached to the sixth rail 341 of the fourth link member 340 by the fourth support member 540. A movement of a gap between the second rotating member 220 and the fourth link member 340 may be removed or reduced. Accordingly, the seesaw movement of the second arm member 420 that occurs by the movement of the gap may be supplemented, and the folding movement caused by the movement of the gap may be reduced or removed.

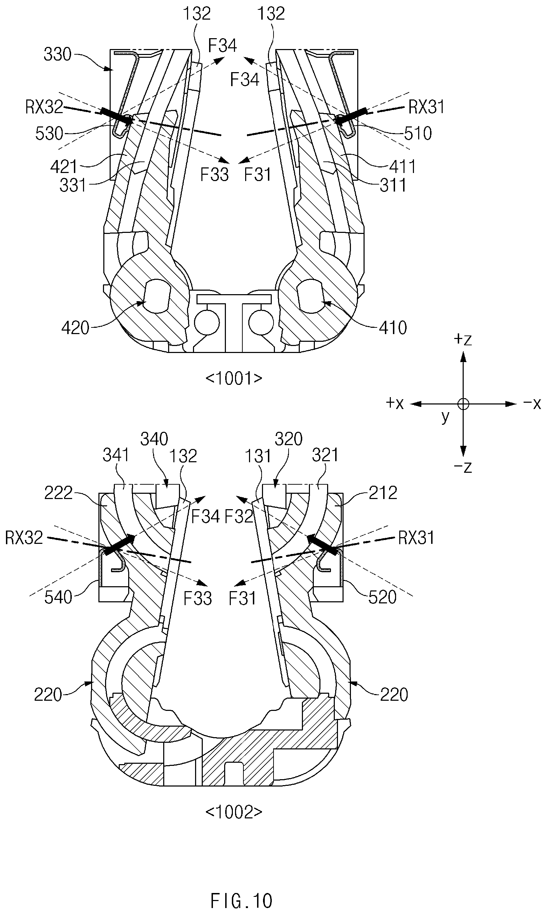

FIG. 10 is a view illustrating an example of a state of the hinge structure and states of the support members that support the arm members and the rotating members in the closed state of the electronic device according to an embodiment. In FIG. 10, view 1001 is a view illustrating an example of the first support member and the third support member that support the arm members when the electronic device is in the closed state, and view 1002 is a view illustrating an example of the second support member and the fourth support member that support the rotating members when the electronic device is in the closed state.

Referring to FIGS. 1 to 10, the electronic device 100 may be disposed in the closed state. When the electronic device 100 is in the closed state, one surface (e.g., a surface, on which the first region 161 of the display 160 is seated) of the first wing plate 131 and one surface (e.g., a surface, on which the second region 162 of the display 160 is seated) of the second wing plate 132 may be disposed to face each other. A convex portion of the third region 163 (or the folding region) disposed between the first region 161 and the second region 162 of the display 160 may be disposed to face the -z axis direction.

When the electronic device 100 is in the closed state, the first link member 310 and the second link member 320 fixed to the first housing 110 may be disposed to be symmetrical to the third link member 330 and the fourth link member 340 with respect to a central portion (e.g., a folded portion of the display 160, a space between the first wing plate 131 and the second wing plate 132, or the center bar) of the electronic device. When the electronic device 100 is in the closed state, a distance between an end of the first link member 310 (or the second link member 320) in the x-axis direction and an end of the third link member 330 (or the fourth link member 340) in the -x-axis direction may form a third distance (or a minimum distance, or a distance that is smaller than the first distance and the second distance).

When the electronic device 100 is in the closed state, the direction F31 of the force applied to the fifth rail structure 411 by the first support member 510 and the direction F32 of the force applied to the second rail structure 212 by the second support member 520 may be disposed to be skewed with respect to the first reference axis RX31. The direction F23 of the force applied to the sixth rail structure 421 by the third support member 530 and the direction F24 of force applied to the fourth rotating rail structure 222 by the fourth support member 540 may be disposed to be skewed with respect to the second reference axis RX32.

When the electronic device 100 is in the closed state, the force in the direction F31 that is substantially perpendicular to the first contact portion 511 of the first support member 510 may be applied to the fifth rail structure 411. The force in the direction F31 between the x axis and -z axis, which faces the second wing plate 132 disposed on the second arm member 420, may be applied to the fifth rail structure 411. When the electronic device 100 is in the closed state, the force in the direction F32 that is substantially perpendicular to the second contact portion 521 of the second support member 520 may be applied to the second rail structure 212. A force in a direction F32 between the x axis and the z axis may be applied to the second rail structure 212 while being skewed with a direction F31 of the force applied to the fifth rail structure 411.

When the electronic device 100 is in the closed state, a force in the direction F33 that is substantially perpendicular to the third contact portion 531 of the third support member 530 may be applied to the sixth rail structure 421. A force in a direction F33 between the -x axis and the -z axis, which faces the first wing plate 131 disposed on the first arm member 410, may be applied to the sixth rail structure 421. When the electronic device 100 is in the closed state, a force in a direction F34 that is substantially perpendicular to the fourth contact portion 541 of the fourth support member 540 may be applied to the fourth rotating rail structure 222. A force in a direction F34 between the x axis and the z axis may be applied to the fourth rotating rail structure 222 while being skewed with the direction F33 of the force applied to the sixth rail structure 421.

When the electronic device 100 is in the closed state, the first arm member 410 including the fifth rail structure 411 may be strongly attached to the third rail 311 of the first link member 310 by the first support member 510. The first arm member 410 (e.g., the fifth rail structure 411 of the first arm member 410) and the first link member 310 (e.g., the third rail 311 of the first link member 310) may remove or reduce a rail gap (or a gap, or a driving gap). The first rotating member 210 including the second rail structure 212 may be strongly attached to the fourth rail 321 of the second link member 320 by the second support member 520. A movement of a gap between the first rotating member 210 and the second link member 320 may be removed or reduced. Accordingly, a folding movement due to a movement of a gap may be reduced or removed.

When the electronic device 100 is in the closed state, the second arm member 420 including the sixth rail structure 421 may be strongly attached to the fifth rail 331 of the third link member 330 by the third support member 530. A rail gap (or a gap or a driving gap) between the second arm member 420 (e.g., the sixth rail structure 421 of the second arm member) and the second link member 320 (e.g., the fourth rail 321 of the second link member) may be removed or reduced. The second rotating member 220 including the fourth rotating rail structure 222 may be strongly attached to the sixth rail 341 of the fourth link member 340 by the fourth support member 540. A movement of a gap between the second rotating member 220 and the fourth link member 340 may be removed or reduced. Accordingly, a seesaw movement of the second arm member 420, which occurs by the movement of the gap may be supplemented, and a folding movement due to the rail gap may be reduced or removed.

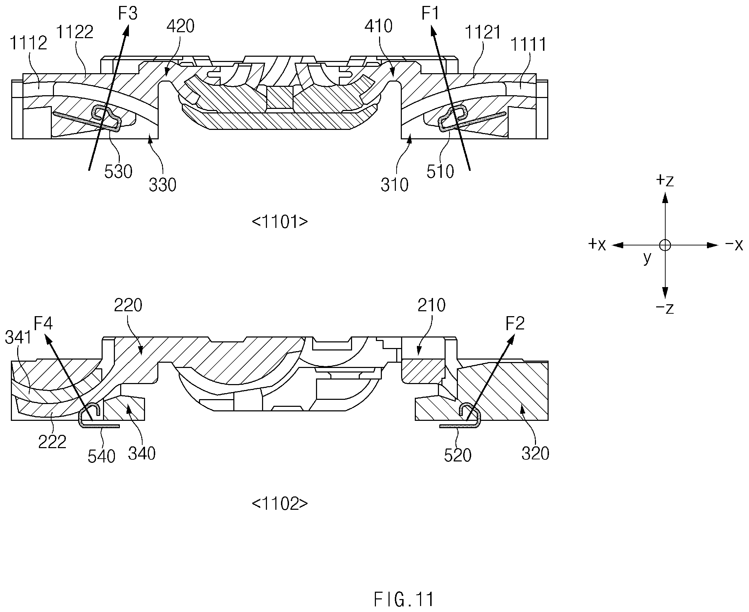

FIG. 11 is a view illustrating an example of a state of the hinge structure and states of the support members that support the arm members and rotating members in the open state of the electronic device according to an embodiment. In FIG. 11, view 1101 illustrates an example of the first support member and the third support member that support the arm members when the electronic device is in the open state, and view 1102 illustrates an example of the second support member and the fourth support member that support the rotating members when the electronic device is in the open state.

Referring to FIGS. 1 to 11, the hinge structure of the electronic device 100 includes a first arm member 410, a second arm member 420, a first rotating member 210, a second rotating member 220, a first link member 310, a second link member 320, a third link member 330, a fourth link member 340, a first support member 510 that supports at least a portion of the first link member 310 with a force in the first direction F1, a second support member 520 that supports at least a portion of the first rotating member 210 with a force in the second direction F2 that is opposite to the force in the first direction F1, a third support member that supports at least a portion of the third link member 330 with a force in the third direction F3, and a fourth support member 540 that supports at least a portion of the second rotating member 220 with a force in the fourth direction F4 that is skewed with the third direction F3.

The components of the hinge structure illustrated in FIG. 11 may correspond to those described above in FIGS. 1 to 10 except for the structures related to the first arm member 410, the second arm member 420, the first link member 310, and the third link member 330. Accordingly, a detailed description of the remaining components, except for the structures related to the first arm member 410, the second arm member 420, the first link member 310, and the third link member 330, will be replaced with the contents described above in FIGS. 1 to 10.

According to an embodiment, the first arm member 410 may be rotated at an angle of 0 degrees to 90 degrees or more. The first arm member 410 may include a first arm rail 1111, and the first link member 310 may include a first link rail structure 1121 corresponding to the first arm rail 1111. At least a portion of the first link rail structure 1121 may be supported by a first support member 510 with a force in the first direction F1. The second arm member 420 may be rotated at an angle of 0 degrees to 90 degrees or more. The second arm member 420 may include a second arm rail 1112, and the third link member 330 may include a second link rail structure 1122 corresponding to the second arm rail 1112. At least a portion of the second link rail structure 1122 may be supported by a third support member 530 with a force in the third direction F3.

According to an embodiment, when the electronic device 100 is in the open state, the closed state, or/and the intermediate state, a direction of the force applied to the first link rail structure 1121 by the first support member 510 and a direction F2 of the force applied to the first rotating member 210 by the second support member 520 may be disposed to be skewed with respect to a reference axis (or the first reference axis RX11) that is perpendicular to one surface (e.g., a surface that faces the z axis) of the first region 161 of the display 160. When the electronic device 100 is in the open state, a direction F1 of the force applied to the first link rail structure 1121 by the first support member 510 may be in a direction between the x axis and the z axis, and a direction F2 of the force applied to the first rotating member 210 by the second support member 520 may be a direction between the -x axis and the z axis.

According to an embodiment, when the electronic device 100 is in the open state, the closed state, or/and the intermediate state, a direction F3 of the force applied to the second link rail structure 1122 by the third support member 530 and a direction F4 of the force applied to the second rotating member 220 by the fourth support member 540 may be disposed to be skewed with respect to a reference axis (or the second reference axis RX2) that is perpendicular to one surface (e.g., a surface that faces the z axis) of the second region 162 of the display 160. When the electronic device 100 is in the open state, the direction F3 of the force applied to the second link rail structure 1122 by the third support member 530 may be a direction between the -x axis and the z axis, and the direction F4 of the force applied to the second rotating member 220 by the fourth support member 540 may be a direction between the x axis and the z axis.

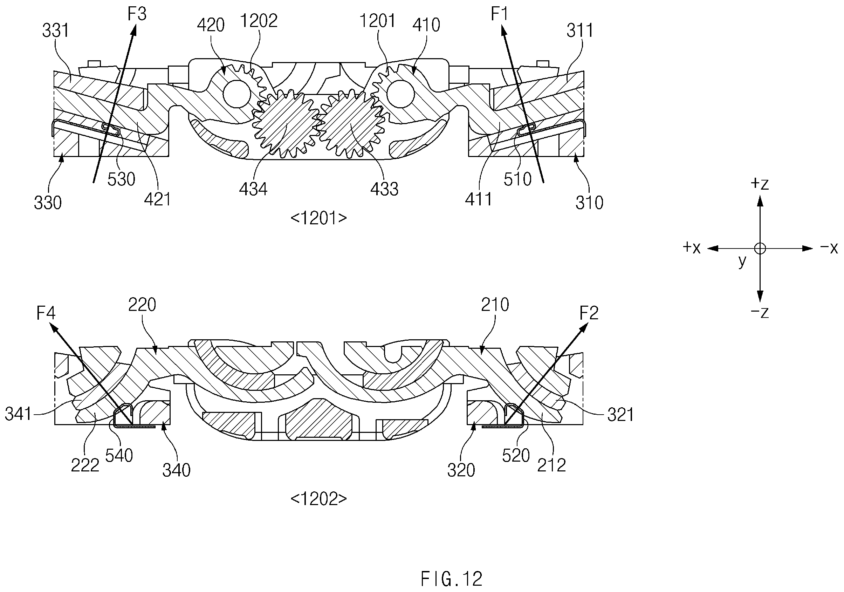

FIG. 12 is a view illustrating an example of a state of the hinge structure and states of the support members that support the arm members and the rotating members in the open state of the electronic device according to an embodiment. In FIG. 12, view 1201 is a view illustrating an example of the first support member and the third support member that support the arm members when the electronic device is in the open state, and view 1202 is a view illustrating an example of the second support member and the fourth support member that support the rotating members when the electronic device is in the open state.

FIGS. 1 to 12, the hinge structure of the electronic device 100 may include a first arm member 410, a second arm member 420, a first rotating member 210, a second rotating member 220, a first link member 310, a second link member 320, a third link member 330, a fourth link member 340, a first support member 510 that supports a portion of the first arm member 410 with a force in the first direction F1, a second support member 520 that supports at least a portion of the first rotating member 210 with a force in the second direction F2 that skewed with the force in the first direction F1, a third support member that supports at least a portion of the second arm member 420 with a force in the third direction F3, and a fourth support member 540 that supports at least a portion of the second rotating member 220 with a force in the fourth direction F4 that is skewed with the force in the third direction F3.

The components of the hinge structure illustrated in FIG. 12 may correspond to those described above in FIGS. 1 to 10 except for the structures related to the first arm member 410 and the second arm member 420. Accordingly, a detailed description of the remaining components, except for the structures related to the first arm member 410, the second arm member 420, the first link member 310, and the third link member 330, will be replaced with the contents described above in FIGS. 1 to 10.

According to an embodiment, at least any one of the first arm member 410 and the second arm member 420 may be rotated at an angle between 0 degrees and 90 degrees. The first arm member 410 and the second arm member 420 may be rotated at an angle between 0 degrees and 90 degrees.

According to an embodiment, the first arm member 410 and the second arm member 420 may be interlocked with a plurality of idle gears 433 and 434. The first gear structure 1201 formed in the first arm member 410 may be connected to the second gear structure 1202 formed on the second arm member 420 through the plurality of idle gears 433 and 434. The first gear structure 1201 and the second gear structure 1202 may be interlocked with each other through the plurality of idle gears 433 and 434, and may be rotated in opposite directions.

According to an embodiment, when the electronic device 100 is in the open state, the closed state, or/and the intermediate state, the direction F1 of the force applied to the fifth rail structure 411 by the first support member 510 and the direction F2 of the force applied to the first rotating member 210 by the second support member 520 may be skewed with each other with respect to a reference axis (or the first reference axis RX11) that is perpendicular to one surface (e.g., a surface that faces the z axis) of the first region 161 of the display 160. When the electronic device 100 is in the open state, the direction F1 of the force applied to the fifth rail structure 411 by the first support member 510 may be a direction between the x axis and the z axis, the direction F2 of the force applied to the first rotating member 210 by the second support member 520 may be a direction between the -x axis and the z axis.

According to an embodiment, when the electronic device 100 is in the open state, the closed state, or/and the intermediate state, the direction F3 of the force applied to the sixth rail structure 421 by the third support member 530 and the direction F4 of the force applied to the second rotating member 220 by the fourth support member 540 may be disposed to be skewed with each other with respect to a reference axis (or the second reference axis RX2) that is perpendicular to one surface (e.g., a surface that faces the z axis) of the second region 162 of the display 160. When the electronic device 100 is in the open state, the direction F3 of the force applied to the sixth rail structure 421 by the third support member 530 may be a direction between the -x axis and the z axis, and the direction F4 of the force applied to the second rotating member 220 by the fourth support member 540 may be a direction between the x axis and the z axis.

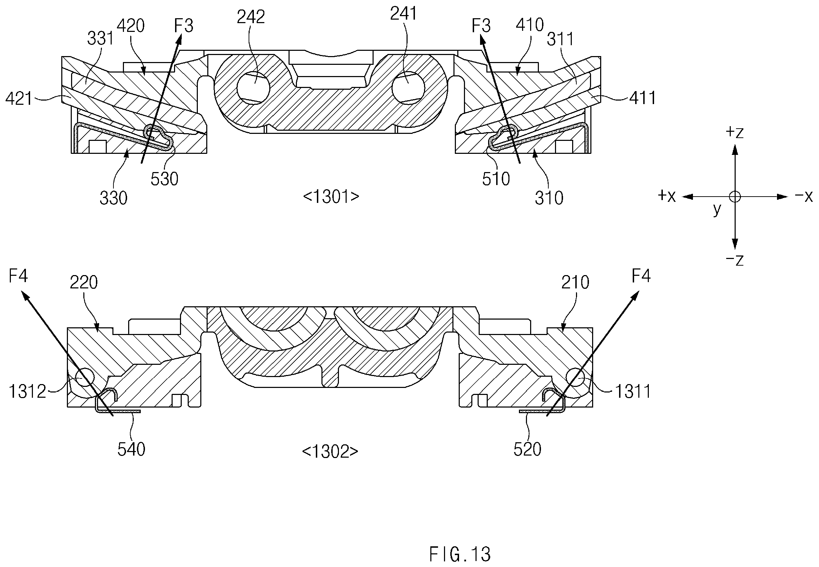

FIG. 13 is a view illustrating an example of a state of the hinge structure and states of the support members that supporting the arm members and rotating members in the open state of the electronic device according to an embodiment. FIG. 13, view 1301 illustrates an example of the first support member and the third support member that support the arm members when the electronic device is in the open state, and view 1302 illustrates an example of the second support member and the fourth support member that support the rotating members when the electronic device is in the open state.

FIGS. 1 to 13, the hinge structure of the electronic device 100 may include a first arm member 410, a second arm member 420, a first rotating member 210, a second rotating member 220, a first link member 310, a second link member 320, a third link member 330, a fourth link member 340, a first support member 510 that supports a portion of the first arm member 410, a second support member 520 that supports at least a portion of the first rotating member 210 in a direction that is skewed with the first support member 510, a third support member that supports at least a portion of the second arm member 420, and a fourth support member 540 that supports at least a portion of the second rotating member 220 with a force in a direction that is skewed with the force in the third direction F3.

According to an embodiment, one end (e.g., an end that faces the x axis) of the first rotating member 210 may be slid and rotated with respect to the first axis (or the first imaginary axis), and an opposite end (an end that faces the -x axis) thereof may be rotated with respect to the second axis (or the first actual axis) formed by the third shaft 1311. An opposite end of the second rotating member 220 may be slid and rotated with respect to the third axis (or the second imaginary axis), and one end thereof may be rotated with respect to the fourth axis (or the second actual axis) formed by the fourth shaft 1312.

According to an embodiment, one end the first arm member 410 may be rotated with respect to the seventh axis (or the third actual axis) formed by the first shaft 241, and an opposite end (e.g. the fifth rail structure 411) thereof may be slid and rotated with respect to the fifth axis (or the third imaginary axis). An opposite end of the second arm member 420 may be rotated with respect to the eighth axis (or the fourth actual axis) formed by the second shaft 242, and one end (e.g., the sixth rail structure 421) thereof may be slid and rotated with respect to the sixth axis (or the fourth imaginary axis).

According to an embodiment, when the electronic device 100 is in the open state, the closed state, or/and the intermediate state, the direction F1 of the force applied to the fifth rail structure 411 by the first support member 510 and the direction F2 of the force applied to the first rotating member 210 by the second support member 520 with respect to the first reference axis RX11 may be disposed to be skewed. When the electronic device 100 is in the open state, the direction F1 of the force applied to the fifth rail structure 411 by the first support member 510 may be a direction between the x axis and the z axis, and the direction F2 of the force applied to the first rotating member 210 by the support member 520 may be a direction between the -x axis and the z axis.

According to an embodiment, when the electronic device 100 is in the open state, the closed state, or/and the intermediate state, the direction F3 of the force applied to the sixth rail structure 421 by the third support member 530 and the direction F4 of the force applied to the second rotating member 220 by the fourth support member 540 may be disposed to be skewed with each other with respect to the second reference axis RX2. When the electronic device 100 is in the open state, the direction F3 of the force applied to the sixth rail structure 421 by the third support member 530 may be a direction between the -x axis and the z axis, and the direction F4 of the force applied to the second rotating member 220 by the fourth support member 540 may be a direction between the x axis and the z axis.

According to an embodiment, when the electronic device 100 is in the open state, the closed state, or/and the intermediate state, the first arm member 410 including the fifth rail structure 411 may be strongly attached to the third rail 311 of the first link member 310 by the first support member. The first arm member 410 (e.g., the fifth rail structure 411 of the first arm member 410) and the first link member 310 (e.g., the third rail 311 of the first link member 310) may remove or reduce the rail gap (or the gap or the driving gap). The first rotating member 210 including the second rail structure 212 is strongly attached to a part (e.g., the fixing bracket or the first wing plate) that is adjacent to the first rotating member 210 by the second support member 520. The gap (or the rail gap, or the driving gap) between the first rotating member 210 and adjacent parts may be removed or reduced. Accordingly, the seesaw movement of the first arm member 410, which occurs by the rail gap may be supplemented or reduced, and the folding movement due to the rail gap may be reduced or removed.

When the electronic device 100 is in the open state, the closed state, or/and the intermediate state, the second arm member 420 including the sixth rail structure 421 may be strongly attached to the fifth rail 331 of the third link member 330 by the third support member 530. A rail gap (or a gap or a driving gap) between the second arm member 420 (e.g., the sixth rail structure 421 of the second arm member) and the second link member 320 (e.g., the fourth rail 321 of the second link member) may be removed or reduced. The second rotating member 220 including the fourth rotating rail structure 222 may be strongly attached to a part (e.g., the fixing bracket or the second wing plate) that is adjacent to the second rotating member 220 by the fourth support member 540. A gap (or a rail gap or a driving gap) between the second rotating member 220 and adjacent parts may be removed or reduced. Accordingly, a seesaw movement of the second arm member 420, which occurs by the rail gap may be supplemented, and a folding movement due to the rail gap may be reduced or removed.

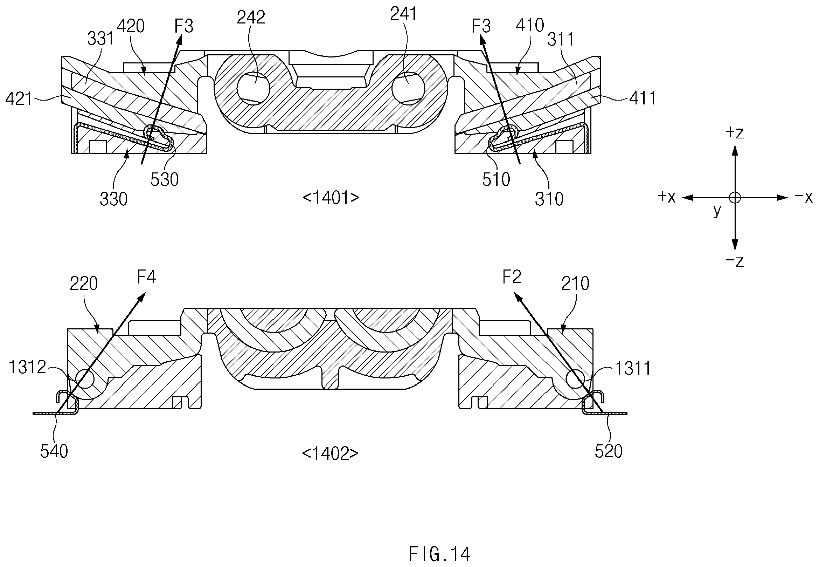

FIG. 14 is a view illustrating an example of a state of the hinge structure and states of the support members that support the arm members and rotating members in the open state of the electronic device according to an embodiment. In FIG. 14, view 1401 illustrates an example of the first support member and the third support member that support the arm members when the electronic device is in the open state, and view 1402 illustrates an example of the second support member and the fourth support member that support the rotating members when the electronic device is in the open state.

FIGS. 1 to 14, the hinge structure of the electronic device 100 may include a first arm member 410, a second arm member 420, a first rotating member 210, a second rotating member 220, a first link member 310, a second link member 320, a third link member 330, a fourth link member 340, a first support member 510 that supports a portion of the first arm member 410, a second support member 520 that supports at least a portion of the first rotating member 210 in the same direction as that of the first support member 510, a third support member that supports at least a portion of the second arm member 420, and a fourth support member 540 that supports at least a portion of the second rotating member 220 in the same direction as that of the third support member 530.

Prior to a description, configurations and structures of the first arm member 410, the second arm member 420, the first rotating member 210, the second rotating member 220, the first link member the second link member 320, the third link member 330, and the fourth link member 340 included in the hinge structure illustrated in FIG. 14 may be applied to the structure of the hinge structure described in FIG. 13 in the same way.

According to an embodiment, when the electronic device 100 is in the open state, the closed state, or/and the intermediate state, the direction F1 of the force applied to the fifth rail structure 411 by the first support member 510 and the direction F2 of the force applied to the first rotating member 210 by the second support member 520 may be disposed to be the same. When the electronic device 100 is in the open state, the direction F1 of the force applied to the fifth rail structure 411 by the first support member 510 and the direction F2 of the force applied to the first rotating member 210 by the second support member 520 may be a direction between the x axis and the z axis.

According to an embodiment, when the electronic device 100 is in the open state, the closed state or/and the intermediate state, the direction F3 of the force applied to the sixth rail structure 421 by the third support member 530 and the direction F4 of the force applied to the second rotating member 220 by the fourth support member 540 may be disposed to be the same. When the electronic device 100 is in the open state, the direction F3 of the force applied to the sixth rail structure 421 by the third support member 530 and the direction F4 of the force applied to the second rotating member 220 by the fourth support member 540 may be a direction between the -x axis and the z axis.

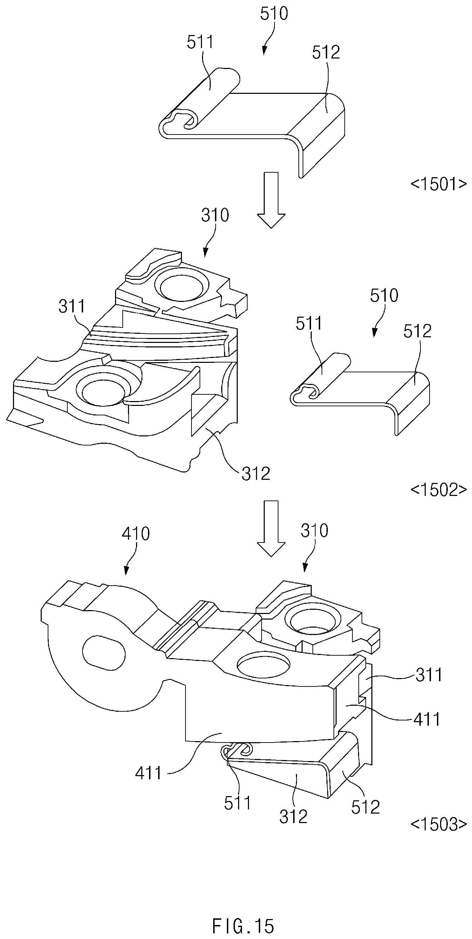

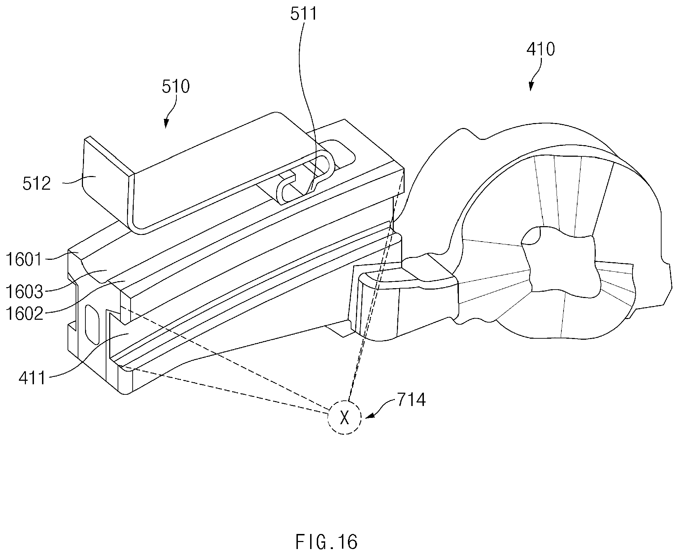

FIG. 15 is a view illustrating an example of a process of assembling the hinge structure according to an embodiment, and FIG. 16 is a view illustrating a portion of the hinge structure assembled through the assembly process of FIG. 15. In FIGS. 15 and 16, a process of assembling the first support member 510, the first arm member 410, and the first link member 310 of the hinge structures described above in FIGS. 1 to 14 will be described as an example. The process of assembling the first support member 510, the first arm member 410, and the first link member 310 may be the same as the process of assembling the third support member 530, the second arm member 420, and the third link member 330.

The assembly process of the electronic device, which will be described below is simply an example for helping understanding of the disclosure, and contents, such as an assembly order and an assembly method may be changed in various ways. Furthermore, for components that are the same as those described above through the drawings, the same reference numerals will be used and a detailed description thereof will be omitted.

Referring to FIGS. 15 and 16, in operation 1501, the first support member 510 may be provided. The first support member 510 may be formed by pressing a stainless steel plate (an SUS plate). The first support member 510 may include a first contact portion 511 and a first fixing portion 512. The first contact portion 511 may include at least one curved region that is bent or curved to provide an elastic force. The first fixing portion 512 may have a shape corresponding to a shape of a part on which the first support member 510 is seated.

In operation 1502, the first link member 310 may be provided. The first link member 310 includes the third rail 311 that is formed in a structure corresponding to the fifth rail structure 411 of the first arm member 410, and the first link body 312, on which the first support member 510 is seated. The first fixing portion 512 of the first support member 510 may be seated on the first link body 312 of the first link member 310. The first fixing portion 512 of the first support member 510 may be assembled with the first link member 310 through a welding process, or/and a process using a fastening member (e.g., a screw or a bolt), or/and an adhesion process using an adhesive member.

In operation 1503, the first arm member 410 may be held on the first support member 510 seated on the first link member 310. At least a portion of the fifth rail structure 411 of the first arm member 410 may contact the first contact portion 511 of the first support member 510. The first contact portion 511 may contact at least a portion of the fifth rail structure 411, and may support the fifth rail structure 411. The first contact portion 511 may be elastically pressed when contacting the fifth rail structure 411, and may maintain contact with the fifth rail structure 411 by using an elastically repulsive force. Accordingly, the fifth rail structure 411 may be strongly attached to the third rail 311 of the first link member 310.

According to an embodiment, the first support member 510 may support the rear surface of the first arm member 410 having the same center as the fourth axis 714, as illustrated in FIG. 16. According to an embodiment, the first contact portion 511 of the first support member 510 may contact the rear surface of the first arm member 410. The rear surface of the first arm member 410 may be divided into a first arm support surface 1601 and a second arm support surface 1602 by a first groove 1603 formed in a grooved structure. The first groove 1603 may have a depth in an opposite direction a direction that faces the first support member 510. Portions of the first arm support surface 1601 and the second arm support surface 1602 may be connected to each other, and the remaining portions of the first arm support surface 1601 and the second arm support surface 1602 may be formed to be spaced apart from each other with in the first groove 1603 being interposed therebetween. The first support member 510 may support two points (e.g., the first arm support surface 1601 and the second arm support surface 1602) of the rear surface of the first arm member 410. In this way, the first arm member 410 is stably and widely supported at a plurality of points (e.g., the first arm support surface 1601 and the second arm support surface 1602) by the first support member 510. The first arm member 410 may reduce a frictional surface with the first support member 510 through the first groove 1603, and thus, grinding and/or breakage of the first support member 510 may be reduced.

Similarly, the third support member 530 may contact the sixth rail structure 421 of the second arm member 420 having a plurality of arm support surfaces 1601 and 1602. The plurality of arm support surfaces 1601 and 1602 may be distinguished by the groove 1603 having a depth in an opposite direction to a direction that faces the third support member 530.

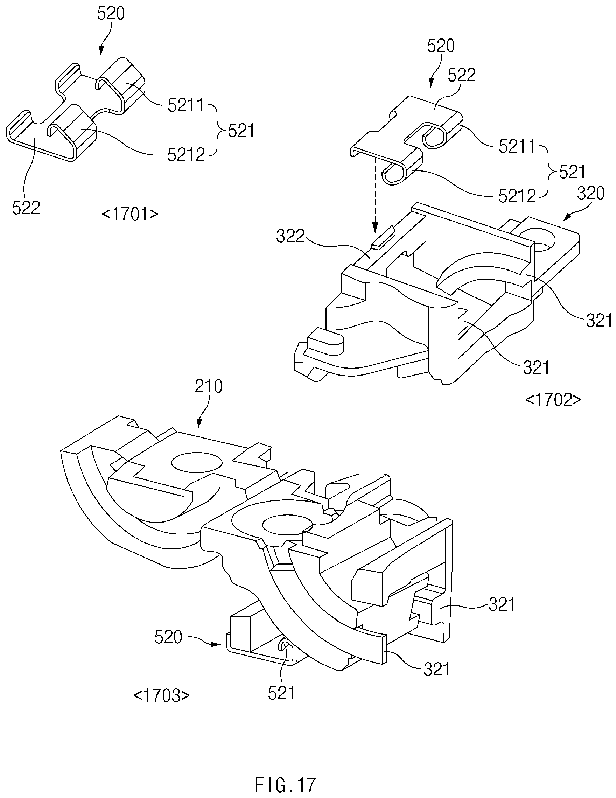

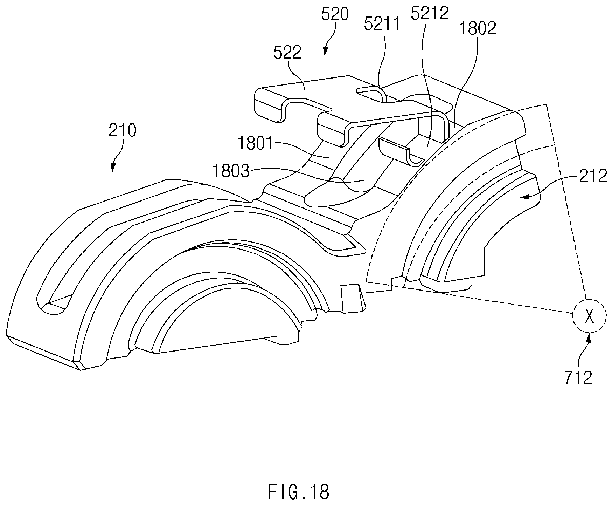

FIG. 17 is a view illustrating an example of an assembly process of the hinge structure according to an embodiment, and FIG. 18 is a view illustrating a portion of the hinge structure assembled through the assembly process of FIG. 17. In FIGS. 17 and 18, a process of assembling the second support member, the first rotating member 210, and the second link member 320 of the hinge structures described above in FIGS. 1 to 14 will be described as an example. The process of assembling the second support member 520, the first rotating member 210, and the second link member 320 may be the same as the process of assembling the fourth support member 540, the second rotating member 220, and the fourth link member 340.

The assembly process of the electronic device that will be described below is simply an example for helping understanding of the disclosure, and contents, such as an assembly order and an assembly method, may be changed in various ways. Furthermore, for components that are the same as those described above through drawings, the same drawing numbers will be used and a detailed description thereof will be omitted.

Referring to FIGS. 17 and 18, in operation 1701, the second support member 520 may be provided. The second support member 520 may be formed by pressing a stainless steel plate (an SUS plate). The second support member 520 may include a second contact portion 521 and a second fixing portion 522. The second contact portion 521 may include at least one curved region that is bent or curved to provide an elastic force. The second contact portion 521 may include a plurality of first contact regions 5211 and second contact regions 5212 that are spaced apart from each other. The second fixing portion 522 may have a shape corresponding to a shape of a part, on which the second support member 520 is seated. The second fixing portion 522 may be formed to be connected to the first contact regions 5211 and the second contact regions 5212.

In operation 1702, the second link member 320 may be provided. The second link member 320 may include a fourth rail 321 that is formed in a structure corresponding to the second rail structure 212 of the first rotating member 210, and a second link body 322, on which the second support member 520 is seated. The second fixing portion 522 of the second support member 520 may be seated on the first link body 322 of the second link member 320. The first fixing portion 512 of the first support member 510 may be assembled with the second link member 320 through a welding process, or/and a process using a fastening member (e.g., a screw or a bolt), or/and an adhesion process using an adhesive member.

In operation 1703, the first rotating member 210 may be held on the second support member 520 seated on the second link member 320. At least a portion of the second rail structure 212 of the first rotating member 210 may contact the second contact portion 521 of the second support member 520. The second contact portion 521 may contact at least a portion of the second rail structure 212 and may support the second rail structure 212. The second contact portion 521 may be elastically pressed when contacting the second rail structure 212, and may maintain contact with the second rail structure 212 by using an elastic force (a repulsive force). Accordingly, the second rail structure 212 may be strongly attached to the fourth rail 321 of the second link member 320.

According to an embodiment, the second support member 520 may support the rear surface of the first rotating member 210 having the same center as the second axis 712, as illustrated in FIG. 18. The second contact portion 521 of the second support member 520 may contact the rear surface of the first rotating member 210. The rear surface of the first rotating member 210 may be divided into a first rotation support surface 1801 and a second rotation support surface 1802 by a second groove 1803 formed in a grooved structure. Portions of the first rotation support surface 1801 and the second rotation support surface 1802 may be connected to each other, and the remaining portions of the first rotation support surface 1801 and the second rotation support surface 1802 may be spaced apart from each other with the second groove 1803 being interposed therebetween. The second support member 520 may support two points (e.g., the first rotation support surface 1801 and the second rotation support surface 1802) of the rear surface of the first rotating member 210. In this way, the first rotating member 210 is stably and widely supported at a plurality of points (e.g., the first rotation support surface 1801 and the second rotation support surface 1802) by the second support member 520. The first rotating member 210 may reduce a frictional surface with the second support member 520 through the second groove 1803, and thus, may prevent or reduce grinding and/or breakage of the second support member 520.

Similarly, the fourth support member 540 may contact the fourth rail structure 222 of the second rotating member 220 having a plurality of rotation support surfaces 1801 and 1802. The plurality of rotation support surfaces 1801 and 1802 may be distinguished by a groove 1803 having a depth in an opposite direction to a direction that faces the fourth support member 540.

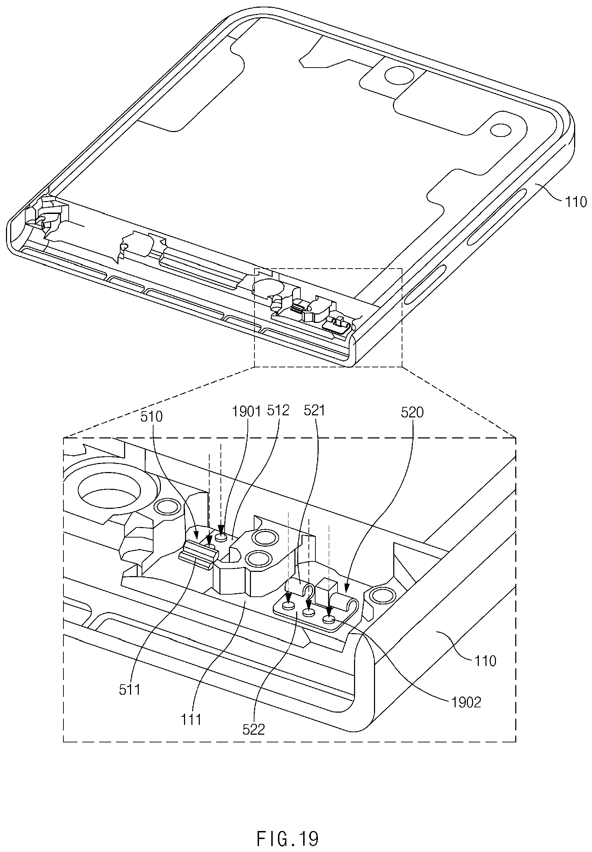

FIG. 19 is a view illustrating an example of a portion of the housing of the electronic device according to an embodiment. In FIG. 19, the first housing 110 coupled to the first support member 510 and the second support member 520 of the hinge structures described above in FIGS. 1 to 18 will be described as an example. At least a portion of the first housing 110 coupled to the first support member 510 and the second support member 520 have the same structure and configuration as at least a portion of the second housing 120 coupled to the third support member 530 and the fourth support member 540.

Referring to FIGS. 1 to 19, the first fixing portion 512 of the first support member 510 may be directly seated on one surface 111 of the first housing 110. The first fixing portion 512 of the first support member 510 may be formed in a flat shape along a shape of the one surface 111 of the first housing 110. The first fixing portion 512 of the first support member 510 may be directly fixed to one surface of the first housing 110 through the fastening member 1901.

The second fixing portion 522 of the second support member 520 may be directly seated on one surface 111 of the first housing 110. The second fixing portion 522 of the second support member 520 may be formed in a flat shape along a shape of the one surface 111 of the first housing 110. The second fixing portion 522 of the second support member 520 may be directly fixed to one surface of the first housing 110 through the fastening member 1902.

Meanwhile, the above-described hinge structures are not limited to the embodiments described in the drawings, and the hinge structures described in the drawing may be applied in mutually complex ways. For example, an electronic device according to an embodiment may employ only the plurality of hinge structures described in FIGS. 3 to 13, may employ only the plurality of hinge structures described in FIG. 14, or may complexly employ the plurality of hinge structures described in FIGS. 3 to 13, and the hinge structure described in FIG. 14.

Furthermore, at least one of the shape of the rail structure in FIG. 15, the shape of the support member described in FIG. 18, and the fixing method of the support member described in FIG. 19 may be applied to at least one of the hinge structures described in FIGS. 11 to 13.

As described above, a foldable electronic device according to at least one of various embodiments may include a display 160, a first housing 110 and a second housing 120 in which at least a portion of the display is accommodated, a hinge structure 200a and 200b connected with the first housing 110 and the second housing 120, and a hinge housing 150 on which the hinge structure 200a and 200b is seated. The hinge structure 200a and 200b may include a fixing bracket 230 including a first rail 231 and a second rail 232, wherein at least a portion of the first rail and the second rail is seated on the hinge housing 150, a first rotating member 210 including a first rail structure 211 fastened to the first rail 231 to rotate and a second rail structure 212 extending from the first rail structure 211, a second rotating member 210 including a third rail structure 221 fastened to the second rail 232 to rotate and a fourth rail structure 222 extending from the third rail structure 221, a first arm member 410 rotating in response to rotation of the first rotating member 210 and including a fifth rail structure 411, a second arm member 420 rotating in response to rotation of the second rotating member 220 and including a sixth rail structure 421, a first support member 510 disposed between one surface of the first housing 110 and the other surface (or, opposite surface) of the fifth rail structure 411 to contact the other surface of the fifth rail structure 411, and applying force in a first direction F11, F21, F31, and F1 from the other surface of the fifth rail structure 411, a second support member 520 disposed between one surface of the first housing 110 and the other surface of the second rail structure 212 to contact the other surface of the second rail structure 212 and applying force in a second direction F12, F22, F32, and F2 from the other surface of the second rail structure 212, a third support member 530 disposed between one surface of the second housing 120 and the other surface of the sixth rail structure 421 to contact the other surface of the sixth rail structure 421, and applying force in a third direction F13, F13, F33, and F3 from the other surface of the sixth rail structure 421, and a fourth support member 540 disposed between one surface of the second housing 120 and the other surface of the fourth rail structure 222 to contact the other surface of the fourth rail structure 222 and applying force in a fourth direction F14, F24, F34, and F4 from the other surface of the fourth rail structure 222.

According to an embodiment, the first direction F11, F21, and F31 may cross the second direction F12, F22, and F32 with a first reference axis RX11, RX21, and RX31 perpendicular to one surface of the first region of the display disposed on the first housing 110 interposed therebetween.

According to an embodiment, the third direction F13, F23, and F33 may cross the fourth direction F14, F24, and F34 with a second reference axis RX12, RX22, and RX22 perpendicular to one surface of the second area of the display disposed on the second housing 120 interposed therebetween.

According to an embodiment, the foldable electronic device may further include a first link member 310 including a third rail 311 coupled to the fifth rail structure 411, a second link member 320 including a fourth rail 321 coupled to the sixth rail structure 421, a third link member 330 including a fifth rail 331 coupled to the third rail structure 221, and a fourth link member 340 including a sixth rail 341 coupled to the fourth rail structure 222.

According to an embodiment, the first support member 510 may include a first fixing part 512 fixed to at least one of the first link member 310 and the first housing 110, and a first contact portion 511 bent or curved between the fifth rail structure 411 and the first fixing portion.

According to an embodiment, the second support member 520 may include a second fixing part 522 fixed to at least one of the second link member 320 and the first housing 110, and a second contact portion 521 bent or curved between the second rail structure 212 and the first fixing portion.

According to an embodiment, at least a portion of the first contact portion 511 may contact and elastically press the fifth rail structure 411 in the first direction F11, F21, and F31, and at least a portion of the second contact portion 212 may be elastically pressed by contacting the second rail structure 212 in the second direction F12, F22, and F32 crossing the first direction F11, F21, and F31.

According to an embodiment, the third support member 530 may include a third fixing part 532 fixed to at least one of the third link member 330 and the second housing 120, and a third contact portion 531 bent or curved between the sixth rail structure 421 and the third fixing portion.

According to an embodiment, the fourth support member 540 may include a fourth fixing part 542 fixed to at least one of the fourth link member 340 and the second housing 120, and a fourth contact portion 541 bent or curved between the fourth rail structure 22 and the fourth fixing portion 542.

According to an embodiment, at least a portion of the third contact portion 531 may contact and elastically press the sixth rail structure 421 in the third direction F13, F23, and F33, and at least a portion of the fourth contact portion 541 may contact and elastically press the fourth rail structure 222 in the fourth direction F14, F24, and F34.

According to an embodiment, the foldable electronic device may further include a first shaft 241 coupled to the first arm member, and a second shaft 242 coupled to the second arm member is further provided.

According to an embodiment, the first rail structure 211 may rotate about a first axis 711 located on a first plane parallel to the display 160, the second rail structure 212 may rotate or slide about a second axis 712 located on a second plane parallel to the display 160 and different from the first plane, the first shaft 241 may rotate about a third axis 713, the fifth rail structure 411 may rotate or slide about a fourth axis 714 located on a third plane parallel to the display 160 and different from the second plane, the third rail structure 221 may rotate about a fifth axis 715 located on the first plane, the fourth rail structure 222 may rotate or slide about a sixth axis 716 located on the second plane, the second shaft 242 may rotate about a seventh axis 717, and the sixth rail structure 421 may rotate or slide about an eighth axis 718 positioned on the third plane.

According to an embodiment, at least one of the fifth rail structure 411 and the sixth rail structure 421 may include a plurality of arm support surfaces, and the plurality of arm support surfaces 1601 and 1602 are divided by a first groove 1603 having a depth in a direction opposite to a direction toward at least one of the first support member and the third support member.

According to an embodiment, the plurality of arm support surfaces 1601 and 1602 of the fifth rail structure 411 may have the same center as the fourth axis 714, and the plurality of arm support surfaces 1601 and 1602 of the sixth rail structure 421 may have the same center as the eighth axis 718.

According to an embodiment, at least one of the second rail structure 212 and the fourth rail structure 222 may include a plurality of rotation support surfaces 1801 and 1802, and the plurality of rotation support surfaces 1801 and 1802 may be divided by a second groove 1803 having a depth in a direction opposite to a direction toward at least one of the second support member 520 and the fourth support member 540.

According to an embodiment, the plurality of rotation support surfaces 1801 and 1802 of the second rail structure 212 may have the same center as the second axis 712, and the plurality of rotation support surfaces 1801 and 1802 of the fourth rail structure 222 may have the same center as the sixth axis 716.

According to an embodiment, the foldable electronic device may further include a first wing plate 131 fastened to one side of the first rotating member 210 and supporting a portion of the foldable area of the display 160, and a second wing plate 132 fastened to one side of the second rotating member 220 and supporting a portion of a foldable area of the display 160.

According to an embodiment, the first direction F11, F21, and F31 may cross the second direction F12, F22, and F32 with a first reference axis RX11, RX21, and RX31 perpendicular to one surface of the first wing plate 131 interposed therebetween, and the third direction F13, F23, and F33 may cross the fourth direction F14, F24, and F34 with a second reference axis RX12, RX22, and RX32 perpendicular to one surface of the second wing plate 131 interposed therebetween.

According to an embodiment, the first direction F1 and the second direction F2 may be formed in the same direction, and the third direction F3 and the fourth direction F4 may be formed in the same direction.

The hinge structure employed in a portable communication device according to an embodiment may include a fixing bracket 230 including a first rail 231 and a second rail 232, a first rotating member 210 including a first rail structure 211 fastened to the first rail 231 to rotate and a second rail structure 212 extending from the first rail structure 211, a second rotating member 210 including a third rail structure 221 fastened to the second rail 232 to rotate and a fourth rail structure 222 extending from the third rail structure 221, a first arm member 410 rotating in response to rotation of the first rotating member 210 and including a fifth rail structure 411, a second arm member 420 rotating in response to rotation of the second rotating member 220 and including a sixth rail structure 421, a first support member 510 disposed to contact the other surface of the fifth rail structure 411, and applying force in a first direction F11, F21, F31, and F41 from the other surface of the fifth rail structure 411, a second support member 520 disposed to contact the other surface of the second rail structure 212 and applying force in a second direction F12, F22, and F32 that is skewed with the first direction F11, F21, and F31 on one surface of the second rail structure 212, a third support member 530 disposed to contact the other surface of the sixth rail structure 421, and applying force in a third direction F13, F13, F33, and F3 from the other surface of the sixth rail structure 421, and a fourth support member 540 disposed to contact the other surface of the fourth rail structure 222 and applying force in a fourth direction F14, F24, and F34 that is skewed with the third direction F13, F23, and F33 on one surface of the fourth rail structure 222.

According to an embodiment, the hinge structure may further include a first link member 310 including a third rail 311 coupled to the fifth rail structure 411, a second link member 320 including a fourth rail 321 coupled to the sixth rail structure 421, a third link member 330 including a fifth rail 331 coupled to the third rail structure 221, and a fourth link member 340 including a sixth rail 341 coupled to the fourth rail structure 222.

According to an embodiment, a portion of at least any one of the first support member 510, the second support member 520, the third support member 530, and the fourth support member 540 may be formed in a "C" shape.

According to an embodiment, at least any one of the fifth rail structure 411 and the sixth rail structure 421 may include a plurality of arm support surfaces 1601 and 1602, and the plurality of arm support surfaces 1601 and 1602 may be divided by a first groove 1603 having a depth in an opposite direction to a direction that faces at least any one of the first support member 510 and the third support member 530.

According to an embodiment at least one of the second rail structure 212 and the fourth rail structure 222 may include a plurality of rotation support surfaces 1801 and 1802, and the plurality of rotation support surfaces 1801 and 1802 may be divided by a second groove 1803 having a depth in an opposite direction to a direction that faces at least any one of the second support member 520 and the fourth support member 540.

Furthermore, in the above description, the structure related to rotating movement was described by naming it a rail or a rail structure, but the disclosure is not limited to these terms, and the term corresponding to the structure may be changed depending on a viewpoint. For example, the rail may include a boss that protrudes in a direction that protrudes from a flat side wall surface (or a bottom surface) (or in a direction rising from the bottom surface), and a cross-section of which is curved or arc-shaped. The rail structure may include a structure, in which arc-shaped protruding protrusions are disposed to be spaced apart from each other at a specific interval, and thus, an arc-shaped empty space is formed between the protrusions. Accordingly, when the rail structure is fastened to the rail and is rotated by external pressure, it may be rotated or slide along the rail. Meanwhile, the terms of the rail or the rail structure described above may be understood differently depending on a view of point, but the disclosure is not limited thereto. That is, the rails or the rail structures may be disposed in different structures for an operation thereof, and in this case, any one of the rails or the rail structures may be formed in different structures, or at least a portion thereof may be formed as a rail and the remaining portion thereof may be formed as a rail structure.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. A foldable electronic device comprising:
a display (160);
a first housing (110) and a second housing (120), wherein the first housing accommodates at least a first portion (161) of the display (160) and the second housing accommodates at least a second portion (162) of the display (160);
a hinge structure (200a,200b) disposed between the first housing (110) and the second housing (120);
a hinge housing (150) accommodating at least a portion of the hinge structure (200a, 200b),
wherein the hinge structure (200a,200b) includes:
a fixing bracket (230) including a first rail (231) and a second rail (232), wherein at least a portion of the first rail (231) and at least a portion of the second rail (232) are disposed on the hinge housing (150);
a first rotating member (210) including a first rail structure (211) rotatably coupled to the first rail (231) and a second rail structure (212) extending from the first rail structure (211);
a second rotating member (220) including a third rail structure (221) rotatably coupled to the second rail (232) and a fourth rail structure (222) extending from the third rail structure;
a first arm member (410) configured to rotate in response to a rotation of the first rotating member (210), the first arm member (410) comprising a fifth rail structure (411);
a second arm member (420) configured to rotate in response to a rotation of the second rotating member (220), the second arm member (420) including a sixth rail structure (421);
a first link member (310) including a third rail (311) fastened to the fifth rail structure (411);
a second link member (320) including a fourth rail (321) fastened to the second rail structure (212);
a third link member (330) including a fifth rail (331) fastened to the sixth rail structure (421);
a fourth link member (340) including a sixth rail (341) fastened to the fourth rail structure (222);
a first support member (510) disposed between a first surface of the first housing (110) and an opposite surface of the fifth rail structure (411), the first support member (510) configured to contact the opposite surface of the fifth rail structure (411), and apply force in a first direction (F11,F21,F31,F1) from the opposite surface of the fifth rail structure (411);
a second support member (520) disposed between the first surface of the first housing (110) and an opposite surface of the second rail structure (212), the second support member (520) configured to contact the opposite surface of the second rail structure (212) and apply force in a second direction (F12,F22,F32,F2) from the opposite surface of the second rail structure (212);
a third support member (530) disposed between a first surface of the second housing (120) and an opposite surface of the sixth rail structure (421), the third support member (530) configured to contact the opposite surface of the sixth rail structure (421), and apply force in a third direction (F13,F23,F33,F3) from the opposite surface of the sixth rail structure (421);
a fourth support member (540) disposed between the first surface of the second housing (120) and an opposite surface of the fourth rail structure (222), the fourth support member (540) configured to contact the opposite surface of the fourth rail structure (222) and apply force in a fourth direction (F14,F24,F34,F4) from the opposite surface of the fourth rail structure (222).

2. The foldable electronic device of claim 1, wherein the first direction (F11,F21,F31) crosses the second direction (F12,F22,F32) with a first reference axis (RX11,RX21,RX31) perpendicular to a surface of a first region of the display (160) disposed on the first housing (110) interposed therebetween, and
wherein the third direction (F13,F23,F33) crosses the fourth direction (F14,F24,F34)with a second reference axis (RX12,RX22,RX32) perpendicular to a surface of a second area of the display (160) disposed on the second housing (120) interposed therebetween.

3. The foldable electronic device of claim 1, wherein the first support member (510) includes:
a first fixing portion (512) fixed to at least one of the first link member (310) and the first housing (110); and
a first contact portion (511) disposed between the fifth rail structure (411) and the first fixing portion (512), wherein the first contact portion (511) is curved; and
wherein the second support member (520) includes:
a second fixing portion (522) fixed to at least one of the second link member (320) and the first housing (110); and
a second contact portion (521) disposed between the second rail structure (212) and the first fixing portion (512), wherein the second contact portion is curved.

4. The foldable electronic device of claim 3, wherein at least a portion of the first contact portion (511) is elastically pressed while contacting the fifth rail structure (411) in the first direction (F11,F21,F31), and
wherein at least a portion of the second contact portion (521) is elastically pressed while contacting the second rail structure (212) in the second direction (F12,F22,F32) crossing the first direction (F11,F21,F31).

5. The foldable electronic device of claim 1, wherein the third support member (530) includes:
a third fixing portion (532) fixed to at least one of the third link member (330) and the second housing (120); and
a third contact portion (531) disposed between the sixth rail structure (421) and the third fixing portion (532), wherein the third contact portion is curved, and
wherein the fourth support member (540) includes:
a fourth fixing portion (542) fixed to at least one of the fourth link member (340) and the second housing (120); and
a fourth contact portion (541) disposed between the fourth rail structure (222) and the fourth fixing portion (542), wherein the fourth contact portion is curved.

6. The foldable electronic device of claim 5, wherein at least a portion of the third contact portion (531) is elastically pressed while contacting the sixth rail structure (421) in the third direction (F13,F23,F33), and
wherein at least a portion of the fourth contact portion (541) is elastically pressed while contacting the fourth rail structure (222) in the fourth direction (F 14,F24,F34).

7. The foldable electronic device of claim 1, further comprising:
a first shaft (241) coupled to the first arm member (410); and
a second shaft (242) coupled to the second arm member (420),
wherein the first rail structure (211) rotates about a first axis (711) located on a first plane parallel to the display (160),
wherein the second rail structure (212) rotates or slides about a second axis (712) located on a second plane parallel to the display (160) and different from the first plane,
wherein the first shaft rotates about a third axis (713),
wherein the fifth rail structure (411) rotates or slides about a fourth axis (714) located on a third plane parallel to the display (160) and different from the second plane,
wherein the third rail structure (221) rotates about a fifth axis (715) located on the first plane,
wherein the fourth rail structure (222) rotates or slides about a sixth axis (716) located on the second plane,
wherein the second shaft (242) rotates about a seventh axis (717), and
wherein the sixth rail structure (421) rotates or slides about an eighth axis (718) positioned on the third plane.

8. The foldable electronic device of claim 7, wherein at least one of the fifth rail structure (411) and the sixth rail structure (421) includes a plurality of arm support surfaces (1601,1602), and
wherein the plurality of arm support surfaces (1601,1602) are divided by a first groove (1603) having a depth in a direction opposite to a direction toward at least one of the first support member (510) and the third support member (530).

9. The foldable electronic device of claim 8, wherein the fifth rail structure includes at least some of the plurality of arm support surfaces (1601,1602), and the at least some of the plurality of arm support surfaces (1601, 1602) of the fifth rail structure (411) have the same center as the fourth axis (714), and
wherein the sixth rail structure includes at least some of the plurality of arm support surfaces (1601,1602), and the at least some of the plurality of arm support surfaces of the sixth rail structure (421) have the same center as the eighth axis (718).

10. The foldable electronic device of claim 7, wherein at least one of the second rail structure (212) and the fourth rail structure (222) includes a plurality of rotation support surfaces (1801,1802), and
wherein the plurality of rotation support surfaces (1801,1802) are divided by a second groove (1803) having a depth in a direction opposite to a direction toward at least one of the second support member (520) and the fourth support member (540).

11. The foldable electronic device of claim 10, wherein the second rail structure includes at least some of the plurality of rotation support surfaces (1801,1802), and the at least some of the plurality of rotation support surfaces of the second rail structure (212) have the same center as the second axis (712), and
wherein the fourth rail structure includes at least some of the plurality of rotation support surfaces (1801,1802), and the at least some of the plurality of rotation support surfaces of the fourth rail structure (222) have the same center as the sixth axis (716).

12. The foldable electronic device of any one of claim 1 to claim 11, further comprising:
a first wing plate (131) fastened to one side of the first rotating member (210) and supporting a portion of a foldable area of the display (160); and
a second wing plate (132) fastened to one side of the second rotating member (220) and supporting a portion of the foldable area of the display (160).

13. The foldable electronic device of claim 12,
wherein the first direction (F11,F21,F31) crosses the second direction (F 12,F22,F32) with a first reference axis (RX11,RX21,RX31) perpendicular to a first surface of the first wing plate (131) interposed therebetween, and
wherein the third direction (F 13,F23,F33) crosses the fourth direction (F 14,F24,F34) with a second reference axis (RX12,RX22,RX32) perpendicular to a first surface of the second wing plate (132) interposed therebetween.

14. The foldable electronic device of claim 1,
wherein the first direction (F1) and the second direction (F2) are formed in the same direction, and
wherein the third direction (F3) and the fourth direction (F4) are formed in the same direction.

## Patentansprüche

1. Klappbare elektronische Vorrichtung, umfassend:
eine Anzeige (160);
ein erstes Gehäuse (110) und ein zweites Gehäuse (120), wobei das erste Gehäuse zumindest einen ersten Abschnitt (161) der Anzeige (160) aufnimmt und das zweite Gehäuse zumindest einen zweiten Abschnitt (162) der Anzeige (160) aufnimmt;
eine Scharnierstruktur (200a, 200b), die zwischen dem ersten Gehäuse (110) und dem zweiten Gehäuse (120) angeordnet ist;
ein Scharniergehäuse (150), das zumindest einen Abschnitt der Scharnierstruktur (200a, 200b) aufnimmt,
wobei die Scharnierstruktur (200a, 200b) Folgendes beinhaltet:
eine Fixierhalterung (230), die eine erste Schiene (231) und eine zweite Schiene (232) beinhaltet, wobei zumindest ein Abschnitt der ersten Schiene (231) und zumindest ein Abschnitt der zweiten Schiene (232) an dem Scharniergehäuse (150) angeordnet sind;
ein erstes Drehelement (210), das eine erste Schienenstruktur (211), die drehbar an die erste Schiene (231) gekoppelt ist, und eine zweite Schienenstruktur (212), die sich von der ersten Schienenstruktur (211) erstreckt, beinhaltet;
ein zweites Drehelement (220), das eine dritte Schienenstruktur (221), die drehbar an die zweite Schiene (232) gekoppelt ist, und eine vierte Schienenstruktur (222), die sich von der dritten Schienenstruktur erstreckt, beinhaltet;
ein erstes Armelement (410), das dazu konfiguriert ist, sich als Reaktion auf eine Drehung des ersten Drehelements (210) zu drehen, wobei das erste Armelement (410) eine fünfte Schienenstruktur (411) umfasst;
ein zweites Armelement (420), das dazu konfiguriert ist, sich als Reaktion auf eine Drehung des zweiten Drehelements (220) zu drehen, wobei das zweite Armelement (420) eine sechste Schienenstruktur (421) beinhaltet;
ein erstes Verknüpfungselement (310), das eine dritte Schiene (311) beinhaltet, die an der fünften Schienenstruktur (411) befestigt ist;
ein zweites Verknüpfungselement (320), das eine vierte Schiene (321) beinhaltet, die an der zweiten Schienenstruktur (212) befestigt ist;
ein drittes Verknüpfungselement (330), das eine fünfte Schiene (331) beinhaltet, die an der sechsten Schienenstruktur (421) befestigt ist;
ein viertes Verknüpfungselement (340), das eine sechste Schiene (341) beinhaltet, die an der vierten Schienenstruktur (222) befestigt ist;
ein erstes Stützelement (510), das zwischen einer ersten Oberfläche des ersten Gehäuses (110) und einer gegenüberliegenden Oberfläche der fünften Schienenstruktur (411) angeordnet ist, wobei das erste Stützelement (510) dazu konfiguriert ist, die gegenüberliegende Oberfläche der fünften Schienenstruktur (411) zu kontaktieren und Kraft in einer ersten Richtung (F11, F21, F31, F1) von der gegenüberliegenden Oberfläche der fünften Schienenstruktur (411) auszuüben;
ein zweites Stützelement (520), das zwischen der ersten Oberfläche des ersten Gehäuses (110) und einer gegenüberliegenden Oberfläche der zweiten Schienenstruktur (212) angeordnet ist, wobei das zweite Stützelement (520) dazu konfiguriert ist, die gegenüberliegende Oberfläche der zweiten Schienenstruktur (212) zu kontaktieren und Kraft in einer zweiten Richtung (F12, F22, F32, F2) von der gegenüberliegenden Oberfläche der zweiten Schienenstruktur (212) auszuüben;
ein drittes Stützelement (530), das zwischen einer ersten Oberfläche des zweiten Gehäuses (120) und einer gegenüberliegenden Oberfläche der sechsten Schienenstruktur (421) angeordnet ist, wobei das dritte Stützelement (530) dazu konfiguriert ist, die gegenüberliegende Oberfläche der sechsten Schienenstruktur (421) zu kontaktieren und Kraft in einer dritten Richtung (F13, F23, F33, F3) von der gegenüberliegenden Oberfläche der sechsten Schienenstruktur (421) auszuüben;
ein viertes Stützelement (540), das zwischen der ersten Oberfläche des zweiten Gehäuses (120) und einer gegenüberliegenden Oberfläche der vierten Schienenstruktur (222) angeordnet ist, wobei das vierte Stützelement (540) dazu konfiguriert ist, die gegenüberliegende Oberfläche der vierten Schienenstruktur (222) zu kontaktieren und Kraft in einer vierten Richtung (F14, F24, F34, F4) von der gegenüberliegenden Oberfläche der vierten Schienenstruktur (222) auszuüben.

2. Klappbare elektronische Vorrichtung nach Anspruch 1, wobei die erste Richtung (F11, F21, F31) die zweite Richtung (F12, F22, F32) mit einer ersten Bezugsachse (RX11, RX21, RX31) senkrecht zu einer Oberfläche einer ersten Region der Anzeige (160) kreuzt, die auf dem ersten Gehäuse (110) angeordnet ist, das dazwischen eingefügt ist, und
wobei die dritte Richtung (F13, F23, F33) die vierte Richtung (F14, F24, F34) mit einer zweiten Bezugsachse (RX12, RX22, RX32) senkrecht zu einer Oberfläche eines zweiten Bereichs der Anzeige (160) kreuzt, die auf dem zweiten Gehäuse (120) angeordnet ist, das dazwischen eingefügt ist.

3. Klappbare elektronische Vorrichtung nach Anspruch 1, wobei das erste Stützelement (510) Folgendes beinhaltet:
einen ersten Fixierabschnitt (512), der an zumindest einem von dem ersten Verknüpfungselement (310) und dem ersten Gehäuse (110) fixiert ist; und
einen ersten Kontaktabschnitt (511), der zwischen der fünften Schienenstruktur (411) und dem ersten Fixierabschnitt (512) angeordnet ist, wobei der erste Kontaktabschnitt (511) gekrümmt ist; und
wobei das zweite Stützelement (520) Folgendes beinhaltet:
einen zweiten Fixierabschnitt (522), der an zumindest einem von dem zweiten Verknüpfungselement (320) und dem ersten Gehäuse (110) fixiert ist; und
einen zweiten Kontaktabschnitt (521), der zwischen der zweiten Schienenstruktur (212) und dem ersten Fixierabschnitt (512) angeordnet ist, wobei der zweite Kontaktabschnitt gekrümmt ist.

4. Klappbare elektronische Vorrichtung nach Anspruch 3, wobei zumindest ein Abschnitt des ersten Kontaktabschnittes (511) elastisch gedrückt wird, während die fünfte Schienenstruktur (411) in der ersten Richtung (F11, F21, F31) kontaktiert wird, und
wobei zumindest ein Abschnitt des zweiten Kontaktabschnittes (521) elastisch gedrückt wird, während die zweite Schienenstruktur (212) in der zweiten Richtung (F12, F22, F32), welche die erste Richtung (F11, F21, F31) kreuzt, kontaktiert wird.

5. Klappbare elektronische Vorrichtung nach Anspruch 1, wobei das dritte Stützelement (530) Folgendes beinhaltet:
einen dritten Fixierabschnitt (532), der an zumindest einem von dem dritten Verknüpfungselement (330) und dem zweiten Gehäuse (120) fixiert ist; und
einen dritten Kontaktabschnitt (531), der zwischen der sechsten Schienenstruktur (421) und dem dritten Fixierabschnitt (532) angeordnet ist, wobei der dritte Kontaktabschnitt gekrümmt ist, und
wobei das vierte Stützelement (540) Folgendes beinhaltet:
einen vierten Fixierabschnitt (542), der an zumindest einem von dem vierten Verknüpfungselement (340) und dem zweiten Gehäuse (120) fixiert ist; und
einen vierten Kontaktabschnitt (541), der zwischen der vierten Schienenstruktur (222) und dem vierten Fixierabschnitt (542) angeordnet ist, wobei der vierte Kontaktabschnitt gekrümmt ist.

6. Klappbare elektronische Vorrichtung nach Anspruch 5, wobei zumindest ein Abschnitt des dritten Kontaktabschnittes (531) elastisch gedrückt wird, während die sechste Schienenstruktur (421) in der dritten Richtung (F13, F23, F33) kontaktiert wird, und
wobei zumindest ein Abschnitt des vierten Kontaktabschnittes (541) elastisch gedrückt wird, während die vierte Schienenstruktur (222) in der vierten Richtung (F14, F24, F34) kontaktiert wird.

7. Klappbare elektronische Vorrichtung nach Anspruch 1, ferner umfassend:
eine erste Welle (241), die an das erste Armelement (410) gekoppelt ist; und
eine zweite Welle (242), die an das zweite Armelement (420) gekoppelt ist,
wobei sich die erste Schienenstruktur (211) um eine erste Achse (711) dreht, die sich auf einer ersten Ebene parallel zu der Anzeige (160) befindet,
wobei sich die zweite Schienenstruktur (212) um eine zweite Achse (712) dreht oder gleitet, die sich auf einer zweiten Ebene parallel zu der Anzeige (160) befindet und die sich von der ersten Ebene unterscheidet,
wobei sich die erste Welle um eine dritte Achse (713) dreht,
wobei sich die fünfte Schienenstruktur (411) um eine vierte Achse (714) dreht oder gleitet, die sich auf einer dritten Ebene parallel zu der Anzeige (160) befindet und die sich von der zweiten Ebene unterscheidet,
wobei sich die dritte Schienenstruktur (221) um eine fünfte Achse (715) dreht, die sich auf der ersten Ebene befindet,
wobei sich die vierte Schienenstruktur (222) um eine sechste Achse (716) dreht oder gleitet, die sich auf der zweiten Ebene befindet,
wobei sich die zweite Welle (242) um eine siebte Achse (717) dreht, und
wobei sich die sechste Schienenstruktur (421) um eine achte Achse (718) dreht oder gleitet, die auf der dritten Ebene positioniert ist.

8. Klappbare elektronische Vorrichtung nach Anspruch 7, wobei zumindest eine von der fünften Schienenstruktur (411) und der sechsten Schienenstruktur (421) eine Vielzahl von Armstützoberflächen (1601, 1602) beinhaltet, und
wobei die Vielzahl von Armstützoberflächen (1601, 1602) durch eine erste Nut (1603) unterteilt ist, die eine Tiefe in einer Richtung entgegengesetzt zu einer Richtung zu zumindest einem von dem ersten Stützelement (510) und dem dritten Stützelement (530) aufweist.

9. Klappbare elektronische Vorrichtung nach Anspruch 8, wobei die fünfte Schienenstruktur zumindest einige aus der Vielzahl von Armstützoberflächen (1601, 1602) beinhaltet und die zumindest einigen aus der Vielzahl von Armstützoberflächen (1601, 1602) der fünften Schienenstruktur (411) die gleiche Mitte wie die vierte Achse (714) aufweisen, und
wobei die sechste Schienenstruktur zumindest einige aus der Vielzahl von Armstützoberflächen (1601, 1602) beinhaltet und die zumindest einigen aus der Vielzahl von Armstützoberflächen der sechsten Schienenstruktur (421) die gleiche Mitte wie die achte Achse (718) aufweisen.

10. Klappbare elektronische Vorrichtung nach Anspruch 7, wobei zumindest eine von der zweiten Schienenstruktur (212) und der vierten Schienenstruktur (222) eine Vielzahl von Drehstützoberflächen (1801, 1802) beinhaltet, und
wobei die Vielzahl von Drehstützoberflächen (1801, 1802) durch eine zweite Nut (1803) unterteilt ist, die eine Tiefe in einer Richtung entgegengesetzt zu einer Richtung zu zumindest einem von dem zweiten Stützelement (520) und dem vierten Stützelement (540) aufweist.

11. Klappbare elektronische Vorrichtung nach Anspruch 10, wobei die zweite Schienenstruktur zumindest einige aus der Vielzahl von Drehstützoberflächen (1801, 1802) beinhaltet und die zumindest einigen aus der Vielzahl von Drehstützoberflächen der zweiten Schienenstruktur (212) die gleiche Mitte wie die zweite Achse (712) aufweisen, und
wobei die vierte Schienenstruktur zumindest einige aus der Vielzahl von Drehstützoberflächen (1801, 1802) beinhaltet und die zumindest einigen aus der Vielzahl von Drehstützoberflächen der vierten Schienenstruktur (222) die gleiche Mitte wie die sechste Achse (716) aufweisen.

12. Klappbare elektronische Vorrichtung nach Anspruch 1 bis Anspruch 11, ferner umfassend:
eine erste Flügelplatte (131), die an einer Seite des ersten Drehelements (210) befestigt ist und einen Abschnitt eines klappbaren Bereichs der Anzeige (160) stützt; und
eine zweite Flügelplatte (132), die an einer Seite des zweiten Drehelements (220) befestigt ist und einen Abschnitt des klappbaren Bereichs der Anzeige (160) stützt.

13. Klappbare elektronische Vorrichtung nach Anspruch 12,
wobei die erste Richtung (F11, F21, F31) die zweite Richtung (F12, F22, F32) mit einer ersten Bezugsachse (RX11, RX21, RX31) senkrecht zu einer ersten Oberfläche der ersten Flügelplatte (131) kreuzt, die dazwischen eingefügt ist, und
wobei die dritte Richtung (F13, F23, F33) die vierte Richtung (F14, F24, F34) mit einer zweiten Bezugsachse (RX12, RX22, RX32) senkrecht zu einer ersten Oberfläche der zweiten Flügelplatte (132) kreuzt, die dazwischen eingefügt ist.

14. Klappbare elektronische Vorrichtung nach Anspruch 1,
wobei die erste Richtung (F1) und die zweite Richtung (F2) in der gleichen Richtung gebildet sind, und
wobei die dritte Richtung (F3) und die vierte Richtung (F4) in der gleichen Richtung gebildet sind.

## Revendications

1. Dispositif électronique pliable, comprenant :
un afficheur (160) ;
un premier boîtier (110) et un second boîtier (120), ledit premier boîtier recevant au moins une première partie (161) de l'afficheur (160) et ledit second boîtier recevant au moins une seconde partie (162) de l'afficheur (160) ;
une structure de charnière (200a, 200b) disposée entre le premier boîtier (110) et le second boîtier (120) ;
un boîtier de charnière (150) recevant au moins une partie de la structure de charnière (200a, 200b), ladite structure de charnière (200a, 200b) comprenant :
un support de fixation (230) comprenant un premier rail (231) et un deuxième rail (232), au moins une partie du premier rail (231) et au moins une partie du deuxième rail (232) étant disposées sur le boîtier de charnière (150) ;
un premier élément rotatif (210) comprenant une première structure (211) de rail couplée rotative au premier rail (231) et une deuxième structure (212) de rail s'étendant à partir de la première structure (211) de rail ;
un second élément rotatif (220) comprenant une troisième structure (221) de rail couplée rotative au deuxième rail (232) et une quatrième structure (222) de rail s'étendant à partir de la troisième structure de rail ;
un premier élément bras (410) conçu pour tourner en réponse à une rotation du premier élément rotatif (210), le premier élément bras (410) comprenant une cinquième structure (411) de rail ;
un second élément bras (420) conçu pour tourner en réponse à une rotation du second élément rotatif (220), le second élément bras (420) comprenant une sixième structure (421) de rail ;
un premier élément de liaison (310) comprenant un troisième rail (311) fixé à la cinquième structure (411) de rail ;
un deuxième élément de liaison (320) comprenant un quatrième rail (321) fixé à la deuxième structure (212) de rail ;
un troisième élément de liaison (330) comprenant un cinquième rail (331) fixé à la sixième structure (421) de rail ;
un quatrième élément de liaison (340) comprenant un sixième rail (341) fixé à la quatrième structure (222) de rail ;
un premier élément de support (510) disposé entre une première surface du premier boîtier (110) et une surface opposée de la cinquième structure (411) de rail, le premier élément de support (510) étant conçu pour entrer en contact avec la surface opposée de la cinquième structure (411) de rail et appliquer une force dans une première direction (F11, F21, F31, F1) à partir de la surface opposée de la cinquième structure (411) de rail ;
un deuxième élément de support (520) disposé entre la première surface du premier boîtier (110) et une surface opposée de la deuxième structure (212) de rail, le deuxième élément de support (520) étant conçu pour entrer en contact avec la surface opposée de la deuxième structure (212) de rail et appliquer une force dans une deuxième direction (F12, F22, F32, F2) à partir de la surface opposée de la deuxième structure (212) de rail ;
un troisième élément de support (530) disposé entre une première surface du second boîtier (120) et une surface opposée de la sixième structure (421) de rail, le troisième élément de support (530) étant conçu pour entrer en contact avec la surface opposée de la sixième structure (421) de rail et appliquer une force dans une troisième direction (F13, F23, F33, F3) à partir de la surface opposée de la sixième structure (421) de rail ;
un quatrième élément de support (540) disposé entre la première surface du second boîtier (120) et une surface opposée de la quatrième structure (222) de rail, le quatrième élément de support (540) étant conçu pour entrer en contact avec la surface opposée de la quatrième structure (222) de rail et appliquer une force dans une quatrième direction (F14, F24, F34, F4) à partir de la surface opposée de la quatrième structure (222) de rail.

2. Dispositif électronique pliable de la revendication 1, ladite première direction (F11, F21, F31) croisant la deuxième direction (F12, F22, F32) avec un premier axe de référence (RX11, RX21, RX31) perpendiculaire à une surface d'une première zone de l'afficheur (160) disposée sur le premier boîtier (110) interposé entre elles, et
ladite troisième direction (F13, F23, F33) croisant la quatrième direction (F14, F24, F34) avec un second axe de référence (RX12, RX22, RX32) perpendiculaire à une surface d'une seconde zone de l'afficheur (160) disposée sur le second boîtier (120) interposé entre elles.

3. Dispositif électronique pliable de la revendication 1, ledit premier élément de support (510) comprenant :
une première partie de fixation (512) fixée à au moins l'un du premier élément de liaison (310) et du premier boîtier (110) ; et
une première partie de contact (511) disposée entre la cinquième structure (411) de rail et la première partie de fixation (512), ladite première partie de contact (511) étant incurvée ; et
ledit deuxième élément de support (520) comprenant :
une deuxième partie de fixation (522) fixée à au moins l'un du deuxième élément de liaison (320) et du premier boîtier (110) ; et
une deuxième partie de contact (521) disposée entre la deuxième structure (212) de rail et la première partie de fixation (512), ladite deuxième partie de contact étant incurvée.

4. Dispositif électronique pliable de la revendication 3, au moins une partie de la première partie de contact (511) étant pressée élastiquement tout en étant en contact avec la cinquième structure (411) de rail dans la première direction (F11, F21, F31), et
au moins une partie de la deuxième partie de contact (521) étant pressée élastiquement tout en entrant en contact avec la deuxième structure (212) de rail dans la deuxième direction (F12, F22, F32) croisant la première direction (F1, F21, F31).

5. Dispositif électronique pliable de la revendication 1, ledit troisième élément de support (530) comprenant :
une troisième partie de fixation (532) fixée à au moins l'un du troisième élément de liaison (330) et du second boîtier (120) ; et
une troisième partie de contact (531) disposée entre la sixième structure (421) de rail et la troisième partie de fixation (532), ladite troisième partie de contact étant incurvée, et
ledit quatrième élément de support (540) comprenant :
une quatrième partie de fixation (542) fixée à au moins l'un du quatrième élément de liaison (340) et du second boîtier (120) ; et
une quatrième partie de contact (541) disposée entre la quatrième structure (222) de rail et la quatrième partie de fixation (542), ladite quatrième partie de contact étant incurvée.

6. Dispositif électronique pliable de la revendication 5, au moins une partie de la troisième partie de contact (531) étant pressée élastiquement tout en étant en contact avec la sixième structure (421) de rail dans la troisième direction (F13, F23, F33), et
au moins une partie de la quatrième partie de contact (541) étant pressée élastiquement tout en étant en contact avec la quatrième structure (222) de rail dans la quatrième direction (F14, F24, F34).

7. Dispositif électronique pliable de la revendication 1, comprenant en outre :
un premier arbre (241) couplé au premier élément bras (410) ; et
un second arbre (242) couplé au second élément bras (420),
ladite première structure (211) de rail tournant autour d'un premier axe (711) situé sur un premier plan parallèle à l'afficheur (160), ladite deuxième structure (212) de rail tournant ou coulissant autour d'un deuxième axe (712) situé sur un deuxième plan parallèle à l'afficheur (160) et différent du premier plan, ledit premier arbre tournant autour d'un troisième axe (713), ladite cinquième structure (411) de rail tournant ou coulissant autour d'un quatrième axe (714) situé sur un troisième plan parallèle à l'afficheur (160) et différent du deuxième plan,
ladite troisième structure (221) de rail tournant autour d'un cinquième axe (715) situé sur le premier plan,
ladite quatrième structure (222) de rail tournant ou coulissant autour d'un sixième axe (716) situé sur le deuxième plan, ledit second arbre (242) tournant autour d'un septième axe (717), et
ladite sixième structure (421) de rail tournant ou coulissant autour d'un huitième axe (718) positionné sur le troisième plan.

8. Dispositif électronique pliable de la revendication 7, au moins l'une de la cinquième structure (411) de rail et de la sixième structure (421) de rail comprenant une pluralité de surfaces de support de bras (1601, 1602), et
ladite pluralité de surfaces de support de bras (1601, 1602) étant divisées par une première rainure (1603) possédant une profondeur dans une direction opposée à une direction vers au moins l'un du premier élément de support (510) et du troisième élément de support (530).

9. Dispositif électronique pliable de la revendication 8, ladite cinquième structure de rail comprenant au moins certaines de la pluralité de surfaces de support de bras (1601, 1602), et lesdites au moins certaines de la pluralité de surfaces de support de bras (1601, 1602) de la cinquième structure (411) de rail possédant le même centre que le quatrième axe (714), et
ladite sixième structure de rail comprenant au moins certaines de la pluralité de surfaces de support de bras (1601, 1602), et lesdites au moins certaines de la pluralité de surfaces de support de bras de la sixième structure (421) de rail possédant le même centre que le huitième axe (718).

10. Dispositif électronique pliable de la revendication 7, au moins l'une de la deuxième structure (212) de rail et de la quatrième structure (222) de rail comprenant une pluralité de surfaces de support de rotation (1801, 1802), et
ladite pluralité de surfaces de support de rotation (1801, 1802) étant divisées par une seconde rainure (1803) possédant une profondeur dans une direction opposée à une direction vers au moins l'un du deuxième élément de support (520) et du quatrième élément de support (540).

11. Dispositif électronique pliable de la revendication 10, ladite deuxième structure de rail comprenant au moins certaines de la pluralité de surfaces de support de rotation (1801, 1802) et lesdites au moins certaines de la pluralité de surfaces de support de rotation de la deuxième structure (212) de rail possédant le même centre que le deuxième axe (712), et
ladite quatrième structure de rail comprenant au moins certaines de la pluralité de surfaces de support de rotation (1801, 1802) et lesdites au moins certaines de la pluralité de surfaces de support de rotation de la quatrième structure (222) de rail possédant le même centre que le sixième axe (716).

12. Dispositif électronique pliable de l'une quelconque des revendications 1 à 11, comprenant en outre :
une première plaque d'aile (131) fixée à un côté du premier élément rotatif (210) et supportant une partie d'une zone pliable de l'afficheur (160) ; et
une seconde plaque d'aile (132) fixée à un côté du second élément rotatif (220) et supportant une partie de la zone pliable de l'afficheur (160).

13. Dispositif électronique pliable de la revendication 12, ladite première direction (F11, F21, F31) croisant la deuxième direction (F12, F22, F32) avec un premier axe de référence (RX11, RX21, RX31) perpendiculaire à une première surface de la première plaque d'aile (131) interposé entre elles, et
ladite troisième direction (F13, F23, F33) croisant la quatrième direction (F14, F24, F34) avec un second axe de référence (RX12, RX22, RX32) perpendiculaire à une première surface de la seconde plaque d'aile (132) interposé entre elles.

14. Dispositif électronique pliable de la revendication 1, ladite première direction (F1) et ladite deuxième direction (F2) étant formées dans la même direction, et
ladite troisième direction (F3) et ladite quatrième direction (F4) étant formées dans la même direction.
